# EUROPÄISCHE PATENTSCHRIFT

(11) **EP 0 847 485 B1**
(45) Veröffentlichungstag und Bekanntmachung des Hinweises auf die Patenterteilung: **23.06.1999**
(21) Anmeldenummer: 96934399.5
(22) Anmeldetag: 31.08.1996
(51) Int. Cl.: F02B 75/06, H02P 7/00

(54) **SYSTEM ZUR AKTIVEN DÄMPFUNG VON DREHUNGLEICHFÖRMIGKEITEN DER KURBELWELLE EINES VERBRENNUNGSMOTORS ODER EINER DAMIT GEKOPPELTEN WELLE.**
SYSTEM FOR ACTIVELY DAMPING ROTATIONAL NON-UNIFORMITY OF THE CRANKSHAFT OF A COMBUSTION ENGINE OR A SHAFT COUPLED THERETO
SYSTEME D'AMORTISSEMENT ACTIF DES IRREGULARITES DE ROTATION D'UN VILBREQUIN D'UN MOTEUR A COMBUSTION OU UN ARBRE COUPLE A CELUI-CI

(30) Priorität: 31.08.1995 DE 19532163
(43) Veröffentlichungstag der Anmeldung: 17.06.1998
(73) Patentinhaber: ISAD Electronic Systems GmbH & Co.KG, 50733 Köln (DE); GRÜNDL UND HOFFMANN GmbH GESELLSCHAFT FÜR ELEKTROTECHNISCHE ENTWICKLUNGEN, 82319 Starnberg (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601613
(87) Internationale Veröffentlichungsnummer: WO9708435

(56) Entgegenhaltungen:
- EP-A- 0 354 790
- WO-A-95/02758
- DE-A- 4 423 577
- PATENT ABSTRACTS OF JAPAN vol. 013, no. 335 (M-856), 27.Juli 1989 & JP,A,01 113571 (MAZDA MOTOR CORP), 2.Mai 1989,
- PATENT ABSTRACTS OF JAPAN vol. 013, no. 484 (M-886), 2.November 1989 & JP,A,01 190922 (HITACHI LTD), 1.August 1989,

## Beschreibung

Die Erfindung betrifft ein System zur aktiven von Drehungleichförmigkeiten der Kurbelwelle eines Verbrennungsmotors oder einer damit gekoppelten Welle.

Aus der EP-A-0 354 790 ist ein System zur aktiven von Drehungleichförmigkeiten der Kurbelwelle eines Verbrennungsmotors bekannt, bei dem eine elektrische Maschine - je nach momentan vorliegender Drehungleichförmigkeit - antreibendes oder bremsendes Drehmoment aufbringt. Die elektrische Maschine wird hierzu phasenrichtig mit Spannungsblöcken gespeist. Bei antreibendem Drehmoment ist die Speisespannung gegenüber der Fahrzeugbatteriespannung verdoppelt.

Bekannt sind auch einfachere Systeme dieser Art, die zur Verringerung von Drehungleichförmigkeiten eines Verbrennungsmotors auf diesen entweder nur antreibend oder nur bremsend wirken können. So offenbaren Patent Abstracts of Japan, Band 11, Nr. 28 (M-557), 27. Januar 1987 & JP-A-61 200 333 (NISSAN I) eine elektrische Synchronmaschine, die direkt mit der Kurbelwelle eines Verbrennungsmotors gekoppelt ist und bei Unterschreiten eines gewissen Standardwerts der Drehzahl als (antreibender) elektrischer Motor geschaltet wird und so einer Drehungleichförmigkeit zum Langsamen hin (einer sog. negativen Drehungleichförmigkeit) entgegenwirkt. Wenn die Drehzahl diesen Standardwert überschreitet, wird der Motor abgeschaltet.

Ein nur bremsend wirkendes System offenbaren Patent Abstracts of Japan, Band 4, Nr. 29 (M-002), 14. März 1980 & JP-A-55 005 454 (TOYOTA). Hier umgreift ein Elektromagnet den äußeren Rand einer Schwungscheibe auf der Kurbelwelle eines Verbrennungsmotors. Synchron mit Drehungleichförmigkeiten wird der Elektromagnet erregt und bremst so die Schwungscheibe phasenrichtig nach Art einer Wirbelstrombremse.

Ähnlich offenbart EP-B-0 427 568 (ISUZU) einen Verbrennungsmotor mit einer herkömmlichen riemengetriebenen Lichtmaschine, die bei Vorliegen einer Drehungleichförmigkeit zum Schnellen hin (einer sog. positiven Drehungleichförmigkeit) bremsend wirkt.

Schließlich offenbart auch DE-A-32 30 607 (VW I) einen Verbrennungsmotor mit einer Schwungrad-Lichtmaschine, die bei Vorliegen einer Drehungleichförmigkeit während Phasen positiver Ungleichförmigkeit bremsend wirkt. Die Lichtmaschine kann auch als Starter für den Verbrennungsmotor dienen.

Weitere Systeme, die zur aktiven Verringerung von Drehungleichförmigkeiten abwechselnd antreibend und bremsend wirken können, sind im Stand der Technik bekannt:

So offenbart EP-B-0 175 952 (MAZDA) ein solches System mit einer Stromwendermaschine, die zwei Ständerwicklungen - eine zum Antreiben und eine zum Bremsen - hat. Durch abwechselndes phasenrichtiges Erregen dieser beiden Ständerwicklungen wirkt die Maschine abwechselnd antreibend und bremsend.

Patent Abstracts of Japan, Band 7, Nr.240 (M-251), 25. Oktober 1983 & JP-A-58 126 434 (NISSAN II) offenbaren ein System mit einer Stromwendermaschine, wobei hier die beim Bremsen gewonnene elektrische Energie in einem Kondensator zwischengespeichert und zum Antreiben wieder verwendet wird.

DE-A-41 00 937 (FICHTEL & SACHS) offenbart ein System mit einer Wechselstrom-Synchronmaschine, die ein Drehmoment mit periodisch wechselnder Richtung erzeugen kann. Die Synchronmaschine ist so ausgebildet, daß die Drehmomentschwankungen in einer festen Phasenlage relativ zur Kurbelwelle auftreten, um so bestimmten Drehungleichförmigkeits-Ordnungen des Verbrennungsmotors entgegenwirken zu können. Um dennoch eine gewisse Verstellung dieser festen Phasenbeziehung zu ermöglichen, kann die Ständer-Wicklungsanordnung der Synchronmaschine mehrere in Umfangsrichtung gegeneinander versetzte Wicklungstränge aufweisen, die wahlweise mit Strom beaufschlagt werden können.

Diese bekannten Systeme ermöglichen grundsätzlich eine aktive Verringerung von Drehungleichförmigkeiten.

Im folgenden sei noch fernliegenderer Stand der Technik genannt, der zum Teil Ausgestaltungen der Erfindung betrifft:

EP-A-0 604 979 (NIPPONDENSO) offenbart ein aktives Vibrationsdämpfungssystem, bei der mit Hilfe einer Gleichstrommaschine Wechselmomente phasenversetzt zu Drehungleichförmigkeiten aufgebracht werden, um dadurch Fahrzeugvibrationen zu dämpfen.

EP-A 0 437 266 (MAGNET-MOTOR) und DE-A 33 35 923 (VW II) offenbaren Schwungradspeicher bei Hybridfahrzeugen.

DE-A 33 38 548 (VW III), DE-A 44 08 719 (VW IV), DE-A 0 938 680 (MÜLLER), DE-A 0 282 671 (MEYER) und US-A 2 790 917 (TROFIMOV) betreffen elektromagnetische Kupplungen.

DE-A 32 43 513 (VW V) offenbart eine elektrische Maschine, in deren Nähe eine mechanische Kupplung angeordnet ist.

H. Deisenroth, C. Trabert: "Vermeidung von Überspannungen bei Pulsumrichterantrieben", etz, 1993, 1060, betrifft Pulsumrichterantriebe.

DE-A 42 30 510 (GRÜNDL & HOFFMANN) und W. Geißler, F. Unger-Weber: "Modelling the Three-Phase Propulsion System of a Modern Multisystem-Locomotive", EPE Firenze, 1991, 4-632, offenbaren flüssigkeitsgekühlte Wechselrichter.

J. Langheim, J. Fetz: "Electric Citybus with two Induction Motors - Power Electronics and Motor Control", ETEP, Vol. 2, No. 6, November/December 1992, 359, betrifft eine feld-orientierte Regelung einer elektrischen Maschine.

Die Erfindung geht von dem technischen Problem aus, o.g. Systeme zur aktiven Verringerung von Drehungleichförmigkeiten weiterzubilden und insbesondere ein System mit hoher Variabilität gegenüber verschiedenartigen Drehungleichförmigkeiten und unterschiedlichen Betriebszuständen z.B. des Verbrennungsmotors anzugeben.

Sie löst dieses Problem mit einem System zur aktiven Dämpfung von Drehungleichförmigkeiten der Kurbelwelle eines Verbrennungsmotors oder einer damit gekoppelten Welle, mit
- einer elektrischen Drehfeldmaschine, die auf die Kurbelwelle oder die Welle wechselnde Drehmomente aufbringt, so daß sie positiven und negativen Drehungleichförmigkeiten entgegenwirkt,
- wenigstens einem Wechselrichter, der die für die magnetischen Felder der elektrischen Maschine benötigten Spannungen und/oder Ströme variabler Frequenz, Amplitude und/oder Phase durch sinusbewertete Pulsmodulation mit einer Taktfrequenz größer 10 kHz erzeugt;
- wobei der Wechselrichter einen Zwischenkreis mit einem gegenüber einem Bordnetz erhöhten Spannungsniveau aufweist;
- und wobei der Wechselrichter im Zwischenkreis mit einem Energiespeicher zum Zwischenspeichern von beim Aktivdämpfen anfallender Energie ausgerüstet ist;
- wobei sowohl die Energieentnahme aus dem Zwischenkreis im Motorbetrieb der elektrischen Maschine als auch die Energieeinspeisung in den Zwischenkreis im Generatorbetrieb jeweils auf dem erhöhten Spannungsniveau erfolgt (Anspruch 1).

Bei den Drehungleichförmigkeiten kann es sich insbesondere um solche handeln, die bei einem Verbrennungsmotor, insbesondere einem Hubkolbenmotor mit innerer Verbrennung, durch die auf die Triebwelle (d.h. insbesondere die Kurbelwelle) wirkenden Gas- und Massenkräfte der einzelnen Hubkolben auftreten. Beispielsweise treten bei einem Vierzylinder-Viertaktmotor relativ große Drehungleichförmigkeiten in der zweiten Ordnung (d.h. dem zweifachen der Drehfrequenz des Motors) auf; entsprechend bei einem Sechszylinder-Viertaktmotor in der dritten Ordnung. Daneben gibt es Drehungleichförmigkeiten bei höheren Ordnungen sowie stochastisch auftretende Ungleichförmigkeiten. Bei dem Verbrennungsmotor kann es sich z.B. um einen Zweitakt- oder Viertaktmotor mit gerader Zylinderzahl (z.B. 2, 4, 8, 10, 12 Zylinder usw.) oder ungerader Zylinderzahl (1, 3, 5, 7, 9, 11 usw. Zylinder) handeln (der z.B. nach dem Otto- oder dem Dieselprinzip arbeitet). Grundsätzlich kann es sich auch um einen andersartigen Verbrennungsmotor, wie z.B. einen Hubkolbenmotor mit äußerer Verbrennung (sog. Stirling-Motor) handeln. Eine andere Möglichkeit ist ein Kreiskolbenmotor (z.B. ein Wankelmotor), bei dem zumindest die Gaskräfte zu Drehungleichförmigkeiten führen können. Daneben kommen Turbinen, insbesondere Gas- oder Dampfturbinen in Frage. Bei ihnen sind die Drehungleichförmigkeiten im allgemeinen zwar nur klein; für Anwendungen, bei denen es auf besonders guten Rundlauf ankommt, kann auch bei ihnen das erfindungsgemäße System äußerst vorteilhaft sein.

Das erfindungsgemäße System ist aber nicht nur geeignet zur aktiven Verringerung von Drehungleichförmigkeiten, welche von einem Antriebsaggregat (z.B. eines Kraftfahrzeugs, Schienenfahrzeugs oder Schiffes) herrühren, wie es in den o.g. Beispielen der Fall ist. Es kann sich vielmehr auch um Drehungleichförmigkeiten handeln, die in einem Antriebsstrang - also zwischen dem Antriebsaggregat und dem Abtriebspunkt entstehen, etwa durch Kardangelenke, räumliche Wellenschwingungen oder Getriebeverschleiß. Das erfindungsgemäße System erlaubt es, auch derartige Drehungleichförmigkeiten effektiv zu verringern.

Ein Antriebssystem könnte auch mit mehreren erfindungsgemäßen Systemen zur aktiven Verringerung von Drehungleichförmigkeiten ausgerüstet sein, z.B. könnte bei einem Kraftfahrzeug ein erstes System direkt auf die Kurbelwelle des Antriebsaggregats (Verbrennungsmotors) wirken, während ein zweites System abwärts der Kupplung, z.B. zwischen Kupplung und Getriebe zum Verringern von Drehungleichförmigkeiten des Triebstrangs dient.

Eine "elektrische Maschine" ist jede Art von Maschine für Rotationsbewegungen, die sowohl als elektrischer Motor wie auch als elektrische Bremse, ggf. als Generator betrieben werden kann. Unter "Drehfeldmaschine" wird - im Gegensatz zu einer Stromwendermaschine - eine Maschine verstanden, in der ein magnetisches Drehfeld auftritt. Hierbei kann es sich z.B. um eine Asynchron- oder Synchronmaschine, insbesondere für Dreiphasenstrom, oder um eine Maschine mit elektronischer Kommutierung handeln. Bei einer Drehfeldmaschine überstreicht das magnetische Feld einen vollen 360°-Grad-Umlauf, bei einer Wanderfeldmaschine hingegen nur einen oder mehrere Ausschnitte hiervon. Bei der Wanderfeldmaschine kann es sich also z.B. um eine Asynchron- oder Synchronmaschine handeln, deren Ständer sich nur über einen oder mehrere Sektoren des Läufers erstreckt - ähnlich einem bzw. mehreren gekrümmten Linearmotor(en).

Grundsätzlich kann die Kopplung der elektrischen Maschine mit der Welle mittelbar sein, z.B. über ein Getriebe. Vorzugsweise handelt es sich jedoch um eine direkte Kopplung, bei der z.B. der Läufer der elektrischen Maschine - ähnlich einem Schwungrad - unmittelbar auf der Welle (i.a. der Kurbelwelle des Verbrennungsmotors) oder einer ggf. koppelbaren Verlängerung der Welle sitzt. Er ist vorzugsweise drehfest mit der Welle verbunden.

Der Wechselrichter kann die für die magnetischen Felder (insb. Dreh- bzw. Wanderfelder) benötigten Spannungen und/oder Ströme mit (innerhalb gewisser Grenzen) frei wählbarer Frequenz, Amplitude oder Phase oder beliebiger Kombinationen dieser Größen erzeugen. Er kann dies vorteilhaft mit Hilfe elektronischer Schalter aus einer vorgegebenen Gleich- oder Wechselspannung oder einem vorgegebenen Gleich- oder Wechselstrom tun. Besonders vorteilhaft sind alle drei Größen - Frequenz, Amplitude und Phase - frei wählbar.

Insgesamt hat das erfindungsgemäße System mit seinem Wechselrichterantrieb den Vorteil, mit hoher Variabilität bei unterschiedlichsten Betriebszuständen und verschiedenartigsten Drehungleichförmigkeiten diese effektiv verringern und in vielen Fällen praktisch vollständig unterdrücken zu können und einfach eine ggf. gewünschte Überlagerung eines Zusatz-Drehmoments mit gewünschter Stärke herbeiführen zu können.

Die Steuereinrichtung steuert den Wechselrichter so, daß die elektrische Maschine zur Drehungleichförmigkeits-Veringerung ein schnell alternierendes, und zwar bei einer positiven Drehungleichförmigkeit ein bremsendes und bei einer negativen Drehungleichförmigkeit ein antreibendes Drehmoment erzeugt. Diesem Drehmoment kann sie vorteilhaft zur zusätzlichen Erzielung einer antreibenden Wirkung oder einer bremsenden oder generatorischen Wirkung zumindest zeitweise ein positives bzw. negatives Drehmoment überlagern (Anspruch 2). Bei Ausgestaltungen, bei denen die elektrische Maschine außerdem als elektromagnetische Kupplung wirkt, kann an die Stelle des schnell alternierend bremsenden und antreibenden Drehmoments ein schnell variierend größerer und kleinerer Kupplungsschlupf treten.

Unter einer "schnellen Variation" wird eine Variation im Frequenzbereich der zu verringernden Drehungleichförmigkeiten verstanden, also z.B. bei der Drehungleichförmigkeit der 2. Ordnung und bei einer Drehzahl von 3000 U/min (in neuerer Einheit ausgedrückt min⁻¹) eine Variation mit einer Frequenz von 100 Hz. Demgegenüber variiert das ggf. überlagerte Zusatz-Drehmoment - abgesehen von möglicherweise steilen Flanken am Anfang oder Ende der Überlagerung - im allgemeinen langsam oder ist konstant.

Durch die (insbesondere additive) Überlagerung des Zusatz-Drehmoments in der gewünschten Richtung und Stärke sind die Drehungleichförmigkeits-Verringerung und die Zusatz-Drehmomenterzeugung voneinander entkoppelt. Das schnell variierende Drehmoment wird in seinem Verlauf durch die Überlagerung praktisch nicht verändert, nur gegenüber der Nullinie verschoben. Ausnahmsweise verändert sich das schnell variierende Drehmoment nur dann, falls der Verbrennungsmotor aufgrund der mit der Zuschaltung des Zusatz-Drehmoments einhergehenden Laständerung tätsächlich geänderte Drehungleichförmigkeiten zeigt.

Falls das momentan gelieferte Zusatz-Drehmoment kleiner als die momentane Amplitude des Wechsel-Drehmoments ist, zeigt das Gesamt-Drehmoment der elektrischen Maschine - wenn auch gegenüber der Nullinie verschoben - abwechselnd positive und negative Werte. Falls es hingegen größer ist, ist das Gesamt-Drehmoment nur positiv oder negativ, wobei dessen Betrag einen schnell variierenden Anteil enthält. Ein bremsendes Zusatz-Drehmoment kann dazu dienen, daß die elektrische Maschine den Kupplungsschlupf verringert, eine bremsende Synchronisier-Funktion ausübt, als Generator zur Stromversorgung fungiert und/oder eine Bremsung des Fahrzeugs herbeiführt oder unterstützt und/oder etwa im Rahmen einer Anti-Schlupf-Regelung durch Bremsen den Schlupf eines Antriebsrads verringert. Die bei Anwenden dieser Bremsfunktionen generatorisch gewonnene Bremsenergie (Zusatzdrehmoment-Bremsenergie) kann - wie die von Drehungleichförmigkeiten herrührende - gespeichert werden (z.B. in einem elektrischen Speicher oder in einem Schwungradspeicher) und als Antriebsenergie wiederverwendet oder in ein Netz oder z.B. die Fahrzeugbatterie eingespeist werden. Ein antreibendes Zusatz-Drehmoment kann einer beschleunigenden Synchronisierfunktion dienen oder eine Beschleunigung des Fahrzeugs unterstützen (die elektrische Maschine wirkt dann als "Booster") oder herbeiführen, beispielsweise um Beschleunigungslöcher, etwa bei einem Turbolader-Motor, zu füllen.

Um einen möglichst hohen Gesamtwirkungsgrad des Systems zu erzielen, wird die beim Verringern einer positiven Drehungleichförmigkeit gewonnene Energie (Drehungleichförmigkeits-Bremsenergie) sowie ggf. die bei bremsendem Zusatz-Drehmoment gewonnene Energie (Zusatzdrehmoment-Bremsenergie) wenigstens teilweise gespeichert und die gespeicherte Drehungleichförmigkeits-Bremsenergie wird wenigstens teilweise zum Verringern einer negativen Drehungleichförmigkeit wiederverwendet.

Die Speicherung der Drehungleichförmigkeits-Bremsenergie sowie ggf. der Zusatzdrehmoment-Bremsenergie kann insbesondere durch einen elektrischen Speicher oder einen mechanischen Speicher (Schwungradspeicher) und auch eine Kombination von beiden erfolgen.

Der Wechselrichter ist ein Zwischenkreis-Wechselrichter, der im Zwischenkreis mit einem Speicher für Bremsenergie ausgerüstet ist. Bei dem Speicher kann es sich insbesondere um einen elektrischen Speicher, z.B; eine Kapazität, eine Induktivität und/oder eine (schnelle) Batterie handeln. Er kann entweder ausschließlich der Speicherung von Bremsenergie dienen (in diesem Fall wäre er i.a. zusätzlich zu einem üblicherweise vorhandenen Zwischenkreis-Speicher geschaltet, welcher die beim Wechselrichter-Taktbetrieb erforderlichen Spannungs- bzw. Stromimpulse liefern kann), oder er kann nur teilweise der Speicherung der Bremsenergie dienen, also noch andere Energie - etwa die zum Taktbetrieb nötige - speichern (im letzteren Fall könnte er mit dem üblichen Zwischenkreis-Speicher zusammenfallen).

Unter einem "Zwischenkreis" versteht man einen Kreis, welcher im wesentlichen Gleichspannung bzw. -strom liefern kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß i.a. besonderen Anforderungen genügen, welche beispielsweise von einer Fahrzeugbatterie kaum erbracht werden könnten: Beispielsweise muß bei einem Spannungszwischenkreis-Wechselrichter der Zwischenkreis Spannungsimpulse mit extremer Flankensteilheit und auf hohem Spannungsniveau bereitsstellen. Eine Fahrzeugbatterie ist hierzu i.a. zu langsam und liefert zu niedrige Spannung. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis. Da bei dem System zur Drehungleichförmigkeits-Verringerung elektrische Energie auch über den Maschinen-Stromrichter gewonnen und nach Zwischenspeicherung wieder über diesen abgeführt werden kann, kann der Wechselrichter im Prinzip auch autark d.h. ohne Eingangsbaugruppe arbeiten. Der Begriff "Zwischenkreis" bezeichnet auch in diesem Fall - obwohl der Kreis dann nicht mehr zwischen zwei Baugruppen liegt - den Kreis mit der o.g. Funktion, Gleichspannung bzw. -strom für den Maschinen-Wechselrichter bereitzustellen.

Bei einer anderen Ausgestaltung kann ein Schwungrad zur Speicherung der Bremsenergie dienen (Anspruch 3). Das Schwungrad ist elektrisch über eine elektrische Maschine mit dem Zwischenkreis gekoppelt. Hierbei kann es sich z.B. um eine von einem eigenen Stromrichter gesteuerte Drehfeld- oder Stromwendermaschine handeln. Beide Stromrichter können vorteilhaft mit ihren Zwischenkreisen elektrisch miteinander gekoppelt sein. Die elektrische Maschine zur Drehungleichförmigkeits-Verringerung und die Schwungrad-Maschine arbeiten im Gegentakt: Wenn erstere bremsend wirkt, beschleunigt zweitere das Schwungrad bzw. wenn erstere antreibend oder weniger bremsend wirkt, bremst zweitere das Schwungrad. Da mit einem solchen Schwungrad-Energiespeicher relativ hohe Energiedichten gespeichert werden können, ist seine Verwendung insbesondere dann vorteilhaft, wenn Anfahrkupplungsschlupf-Energie gespeichert werden soll oder wenn Drehungleichförmigkeiten mit relativ großem Energiegehalt vorliegen, wie es z.B. bei einem Dreizylinder-Viertakt-Dieselmotor der Fall sein kann. Der Schwungrad-Energiespeicher kann auch mit dem o.g. elektrischen Speicher kombiniert werden.

Aufgrund der hohen Variabilität der wechselrichtergesteuerten elektrischen Maschine kann diese neben der aktiven Verringerung von Drehungleichförmigkeiten gleichzeitig oder zeitlich versetzt auch andere Funktionen ausführen und so herkömmlicherweise auf diese Funktionen spezialisierte Maschinen ersetzen. Insbesondere kann sie außerdem die Funktion eines Starters, z.B. für einen Verbrennungsmotor haben (Anspruch 4). Vorzugsweise ist die elektrische Maschine als Direktstarter ausgebildet, d.h. sie ist direkt mit der Triebwelle des Verbrennungsmotors gekoppelt oder koppelbar und ist so ausgebildet, daß sie den Verbrennungsmotor im Zusammenlauf aus dem Stand starten kann. Unter einer "direkten Kopplung" wird insbesondere eine getriebelose Kopplung des Läufers der elektrischen Maschine mit der Triebwelle verstanden. Die Drehzahl des Läufers gleicht vorzugsweise der Drehzahl des Verbrennungsmotors. Bei einem "Zusammenlauf" bleibt das Verhältnis der momentanen Drehzahlen des elektrischen Motors und des Antriebsaggregats - im Unterschied etwa zu einem Schwungradstarter - im wesentlichen konstant (und zwar hat es insbesondere den Wert Eins). Zusammenlauf "aus dem Stand" bedeutet, daß die elektrische Maschine und das Antriebsaggregat - anders als bei dem o.g. Schwungradstarter - gemeinsam aus dem Stand hochlaufen. Vorteilhaft sitzt der Läufer der elektrischen Maschine auf der Triebwelle (i.a. der Kurbelwelle) des Verbrennungsmotors oder einer mit ihr gekoppelten oder koppelbaren Verlängerung. Er ist vorzugsweise drehfest mit der Triebwelle oder der Verlängerung gekoppelt oder koppelbar.

Herkömmliche Starter bringen wegen ihrer hohen Übersetzung den Verbrennungsmotor nur auf eine relativ niedrige Start-Drehzahl (typischerweise 80-250 U/min), die weit unterhalb dessen Leerlauf-Drehzahl (typischerweise 600-800 U/min) liegt. Die Drehzahldifferenz zwischen Start-Drehzahl und der Leerlauf-Drehzahl muß der Verbrennungsmotor dann aus eigener Kraft überwinden. Er benötigt hierfür jedoch - da er sich bei diesen Drehzahlen weit unterhalb seiner Leerlauf-Drehzahl in einem sehr ungünstigen Betriebsbereich befindet - ein relativ großes Quantum Kraftstoff, welches zudem nur unvollständig verbrennt. Jeder Motorstart ist daher mit zusätzlichem Kraftstoffverbrauch und besonders umweltschädlichen Emissionen verbunden. Vorzugsweise ist daher das System so ausgebildet, daß die elektrische Maschine wenigstens im wesentlichen bis zum Erreichen der Leerlauf-Drehzahl des Verbrennungsmotors (welche bei Betriebstemperatur üblicherweise zwischen 600 und 800 U/min liegt) antreibend wirkt. Diese Maßnahme läßt den Verbrennungsmotor praktisch erst bei Erreichen seiner Leerlauf-drehzahl anlaufen und läßt so das betrieblich ungünstige Hochlaufen aus eigener Kraft entfallen. Sie vermindert damit den Kraftstoffverbrauch und die besonders schädlichen Emissionen beim Starten und macht zudem den Startvorgang schneller.

Die elektrische Maschine kann alternativ oder zusätzlich die Funktion eines Generators zur Stromversorgung, z.B. zur Ladung einer Batterie oder Speisung eines Bordnetzes, haben (Anspruch 5). Während des Startvorgangs ist i.a. keine Drehungleichförmigkeits-Verringerung erforderlich; hierzu wird die elektrische Maschine vorübergehend als reiner Elektromotor betrieben. Die Generatorfunktion ist hingegen i.a. auch während der Drehungleichförmigkeits-Verringerung erwünscht. Durch Überlagerung des schnell variierenden Moments mit einem gleichförmig bremsenden Moment erreicht man im zeitlichen Mittel einen Gewinn elektrischer Energie.

In entsprechender Weise kann die elektrische Maschine auch als Zusatzfunktion ein Beschleunigen und/oder Abbremsen der Welle herbeiführen oder unterstützen (Anspruch 6). Beispielsweise kann dies der Beschleunigung eines Kraftfahrzeugs zusammen mit dem Antriebsaggregat dienen. Zum Abbremsen eines Fahrzeugs kann die elektrische Maschine als verschleißfreie, ggf. generatorische Bremse oder Zusatzbremse dienen. Im Zusammenhang mit einer Anti-Schlupf-Regelung kann die elektrische Maschine durch Bremsen schnell das Gesamt-Antriebsmoment und damit den Schlupf eines oder mehrerer Antriebsräder verringern. Bei elektromagnetischer Kupplungsfunktion kann der Antriebsrad-Schlupf statt durch Bremsen auch durch Vergrößern des Kupplungs-Schlupfes verringert werden. Es ist möglich, während der Ausführung dieser Zusatzfunktionen die Drehungleichförmigkeits-Verringerungsfunktion auszuschalten oder beide Funktionen gleichzeitig auszuführen, etwa - wie oben erläutert - durch Überlagern eines entsprechenden antreibenden bzw. bremsenden Moments.

Die bei Anwenden dieser Zusatzfunktionen gewonnene Bremsenergie kann - wie die von Drehungleichförmigkeiten herrührende - gespeichert werden (z.B. im elektrischen Speicher oder im Schwungradspeicher) und als Antriebsenergie wiederverwendet oder in ein Netz oder z.B. die Fahrzeugbatterie eingespeist werden. Um bei der Fahrzeugbremsung mit Hilfe der elektrischen Maschine einen möglichst hohen Wirkungsgrad der Bremsenergie-Rückgewinnung zu erzielen, trennt man beim Bremsen vorteilhaft die elektrische Maschine vom Antriebsaggregat mit Hilfe einer dazwischengeschalteten, z.B. mechanischen Kupplung.

Bei herkömmlichen Kraftfahrzeugen, anderen Fahrzeugen und auch stationären Antriebsaggregaten gibt es häufig Hilfsmaschinen, welche - da sie relativ hohe Leistung aufnehmen - mechanisch vom Antriebsaggregat angetrieben werden, z.B. über Riemengetriebe. Hierbei kann es sich z.B. um Klimamaschinen, Servoantriebe, Pumpen oder ähnliches handeln. Eine derartige mechanische Antriebskopplung ist i.a. nicht optimal, da die Hilfsmaschine dem Antriebsaggregat durch die von ihm vorgegebenen Drehzahl-Zustände folgen muß. Sie läuft damit einerseits nicht konstant bei ihrer optimalen Drehzahl und muß andererseits auch dann laufen, wenn dies mangels abgefragter Hilfsleistung gar nicht nötig wäre. Auch zur Überwindung dieser Nachteile ist die erhöhte Zwischenkreisspannung vorteilhaft.

Sie liegt vorzugsweise im oberen Bereich der Niederspannung, wo gerade noch nicht für besonderen Berührungsschutz gesorgt werden muß (z.B. etwa 60 V Gleichspannung) liefert. Geht man darüber hinaus, wird vorzugsweise ein Bereich von 250 - 450 Volt gewählt. Hilfsmaschinen werden vorteilhaft elektrisch auf diesen hohen Spannungsniveaus angetrieben (Anspruch 7). Das derart hohe Spannungsniveau liegt im Zwischenkreis bereits vor, und braucht so nicht besonders für diesen Zusatzzweck erzeugt zu werden. Ein elektrischer statt eines mechanischen Hilfsmaschinen-Antriebs ist deshalb möglich, da aus dem hohen Spannungsniveau relativ kleine Ströme resultieren (im Gegensatz etwa zu dem 12-Volt-Spannungsniveau eines herkömmlichen Kraftfahrzeugnetzes). Elektrisch angetrieben kann man die Hilfsmaschinen im Bedarfsfall bei ihrer optimalen Drehzahl laufen lassen und ansonsten abschalten. Man erreicht so eine deutliche Erhöhung des Gesamtwirkungsgrades. Für Niederleistungsverbraucher kann ein kerkömmliches Niederspannungsbordnetz (12 V oder 24 V) vorgesehen sein.

Die aktive Verringerung von Drehungleichförmigkeiten beruht - wie gesagt - darauf, daß die elektrische Maschine positiven und negativen Drehungleichförmigkeiten entgegenwirkt, also z.B. bei positiven Drehungleichförmigkeiten bremsend und bei negativen antreibend wirkt. Hierfür benötigt die Steuereinrichtung Information über den Zeitpunkt und ggf. den Betrag einer positiven bzw. negativen Drehungleichförmigkeit.

Eine Möglichkeit, diese Information zu erhalten, liegt in einer Messung der momentanen Drehungleichförmigkeit oder einer anderen, mit ihr gekoppelten Größe. Beruht der Betrieb der elektrischen Maschine auf dieser Information, so handelt es sich um eine (rückgekoppelte) Regelung, da das tatsächliche Vorliegen einer Drehungleichförmigkeit zu einer unmittelbaren Rückwirkung auf diese Drehungleichförmigkeit führt.

Als andere Möglichkeit verwendet man als Information für den Betrieb der elektrischen Maschine nicht die tatsächliche, sondern eine erwartete Drehungleichförmigkeit. Es handelt sich hierbei also um eine (nicht-rückgekoppelte) Steuerung. Beispielsweise kann man bei einem Verbrennungsmotor Betrag und Vorzeichen der momentanen Drehungleichförmigkeit als Funktion des (Kurbel)-Wellenwinkels und eines oder weiterer Betriebsparameter (z.B. Drehzahl und Drosselklappenstellung) einmal an einem Prototyp bestimmen bzw. per Rechner simulieren und mit dieser Information, gespeichert in Form eines Kennfeldes, jeden Serien-Verbrennungsmotor ausrüsten. Im Betrieb mißt das System dann den momentan vorliegenden Kurbelwellenwinkel und die weiteren Betriebsparameter (z.B. Drehzahl und Drosselklappenstellung), liest die dazugehörigen gespeicherten Kennfeldwerte für Betrag und Amplitude der erwarteten Drehungleichförmigkeit, und steuert über die Steuereinrichtung die elektrische Maschine entsprechend, um der Drehungleichförmigkeit entgegenzuwirken.

Möglich ist außerdem eine adaptive Steuerung, d.h. eine (nicht-rückgekoppelte) Steuerung, bei der die Steuerinfomation jedoch nicht feststehend ist, sondern durch Messung zeitlich vorausgehender Drehungleichförmigkeiten definiert oder zumindest modifiziert wird.

Möglich sind ferner Mischformen der genannten Arten, z.B. können die in einem Kennfeld gespeicherten Erwartungswerte bezüglich einer erwarteten Größe adaptiv sein (z.B. bezüglich der Amplitude), während sie bezüglich einer anderen erwarteten Größe (z.B. Wellenwinkel) feststehend sein könnten. Entsprechend läßt sich auch Regelung und Steuerung kombinieren, etwa indem der Wellenwinkel als Erwartungswert aus einem Kennfeld entnommen wird, während die Amplitudeninformation aus einer Messung der momentanen Drehungleichförmigkeit abgeleitet wird. Eine sehr vorteilhafte Kombination ist auch eine Regelung mit Vorsteuerung, bei der z.B. in jedem Regelintervall die Regelung zunächst entsprechend einem erwarteten Drehungleichförmigkeitswert aus einem Kennfeld voreingestellt wird (Vorsteuerung) und anschließend die i.a. kleineren Abweichungen des tatsächlichen Werts zum voreingestellten Wert nachgeregelt werden (Regelung). Diese Steuerart liefert bei relativ geringem Aufwand ein sehr schnelles und genaues Regelverhalten. Es kann auch vorteilhaft sein, bei niedrigen Drehzahlen (z.B. im Leerlauf) mit (rückgekoppelter) Regelung zu arbeiten, dagegen bei höheren Drehzahlen zu (nicht-rückgekoppelter) Steuerung überzugehen (Anspruch 8).

Jede dieser verschiedenen Steuerarten hat ihre Vor- und Nachteile: Eine Kennfeldsteuerung ist besonders einfach, erlaubt aber keine Anpassung etwa an produktions- oder verschleißbedingte Streuungen der Drehungleichförmigkeits-Charakteristik und darüberhinaus auch keine Verringerung von stochastischen Drehungleichförmigkeiten. Eine Regelung hat diese letztgenannten Nachteile nicht, stellt aber hohe Anforderungen an die Geschwindigkeit der Meßwerterfassung und -verarbeitung; auch muß sie Stabilitätsbedingungen genügen. Eine adaptive Steuerung und Mischformen der Steuerarten können die Vorteile von Regelung und Steuerung vereinen.

Bei Regelung, adaptiver Steuerung und entsprechenden Mischformen muß die Meßgröße nicht unmittelbar die Drehungleichförmigkeit (ggf. abgeleitet aus einer Messung der Winkellage oder -geschwindigkeit als Funktion der Zeit) sein. Es kann sich vielmehr auch um eine (oder mehrere) andere Größe(n) handeln, die einen Schluß auf zumindest einen Teil der auftretenden Drehungleichförmigkeiten erlaubt (erlauben). Bei einem Verbrennungsmotor kann diese Größe vorteilhaft der Gasdruck in einem oder mehreren Motorzylindern sein. Der Gasdruck ist nämlich eine wesentliche, veränderliche Quelle der Drehungleichförmigkeiten. Außerdem zu berücksichtigen ist eine andere wesentliche, praktisch unveränderliche Quelle - die Massenkräfte. Ihr Beitrag kann in einem Kennfeld fest gespeichert sein. Alternativ (oder ergänzend) kann das momentane Drehmoment des Verbrennungsmotors, z.B. mit Hilfe einer Drehmomentnabe gemessen werden. Die Verwendung des Gasdruckes und/oder des momentanen Drehmoments als Meßgröße erlaubt somit eine relativ einfache und schnelle Regelung, adaptive Steuerung oder entsprechende Mischform (Anspruch 9).

In Fällen, bei denen auf die Welle auch Radialkräfte einwirken - wie bei einem Hubkolbenmotor - wird die Welle neben Drehungleichförmigkeiten i. a. auch zu Radialschwingungen angeregt. Es ist daher vorteilhaft, daß die elektrische Maschine einen Feldsektor aufweist oder mehrere Feldsektoren mit wenigstens teilweise unabhängig steuerbaren Wanderfelden aufweist, wobei das bzw. die Wanderfeld(er) in dem (den) Feldsektor(en) so gesteuert ist (sind), daß die elektrische Maschine neben Drehungleichförmigkeiten auch Radialschwingungen der Welle verringert (Anspruch 10). Hierzu folgende Erläuterung: Bei einer kreisförmig geschlossenen (360°-)Drehfeldmaschine heben sich die auf die Welle wirkenden magnetischen Kräfte aus Symmetriegründen auf, so daß resultierend nur Drehmomente verbleiben. Erstreckt sich das magnetische Feld hingegen nur über einen Sektor (d.h. über weniger als 360°), so ruft das Feld neben einem Drehmoment im allgemeinen auch eine Kraft mit wenigstens einer Komponente in Radialrichtung der Welle hervor. Mit einer Sektormaschine können daher außerdem Radialschwingungen verringert werden. Hierzu wird die elektrische Maschine so gesteuert, daß die in Radialrichtung wirkende magnetische Kraft der momentan ablaufenden Radialschwingungs-Auslenkung entgegengesetzt ist. Mit einem einzigen Feldsektor ist eine gleichzeitige Verringerung von Drehungleichförmigkeiten und Radialschwingungen i. a. nur angenähert möglich. Eine noch bessere Wirkung erzielt man mit mehreren unabhängig steuerbaren Wanderfeldern (z.B. 2, 3, 4, 5, 6, 7, 8 usw.). Selbstverständlich können die mehreren Feldsektoren räumlich in einen kreisförmig umlaufenden Ständer zusammengefaßt sein, wenn sie nur funktionell als Feldsektoren wirken und unabhängig steuerbar sind. Eine elektrische Maschine mit mehreren unabhängigen Feldsektoren kann man übrigens auch als mehrere elektrische Maschinen, die auf einen gemeinsamen Läufer wirken, auffassen.

Alternativ zur Verwendung einer elektrischen Maschine mit unabhängigen Feldsektoren kann das System auch wenigstens einen Aktuator (Linearsteller) aufweisen, der Radialkräfte auf die Welle ausüben kann und so gesteuert ist, daß er Radialschwingungen der Welle entgegenwirkt. Der Aktuator kann z.B. die Form mehrerer Elektromagnete oder piezoelektrischer Steller haben, die gegenphasig zur Radialschwingung auf die Welle wirken.

Um Radial-Resonanzschwingungen der Welle aus dem Betriebs-Drehzahlbereich herauszuverlegen, kann der Läufer der elektrischen Maschine vorteilhaft als passiver Schwingungstilger ausgebildet sein oder es kann ihr ein solcher parallel geschaltet sein.

Die elektrische Drehfeldmaschine des Systems ist vorzugsweise eine Asynchronmaschine, eine Synchronmaschine oder eine Reluktanzmaschine, insbesondere für Drei-Phasen-Strom (Anspruch 11). Eine Asynchronmaschine hat i.a. einen relativ einfach aufgebauten Läufer (i. a. einen Läufer mit Kurzschlußwicklungen oder Wicklungen, deren Enden an Schleifringe geführt sind) und weist daher hinsichtlich der Erstellungskosten und der mechanischen Belastbarkeit Vorteile auf. Sie ist jedoch steuerungstechnisch relativ kompliziert, da Betrag und Phasenwinkel des Läuferstromes lastabhängig, aber nicht direkt über Ständergrößen meßbar sind. Für eine Einstellung eines bestimmten Drehmoments ist jedoch eine Kenntnis des Läuferstromes nötig. Hingegen haben Synchronmaschinen (sie haben Läufer mit ausgeprägten Polen, die über Permanentmagnete oder Strom erregt werden) im allgemeinen höhere Erstellungkosten. Sie sind andererseits steuerungstechnisch einfacher zu handhaben, da bei ihnen das Drehmoment im wesentlichen vom Läuferwinkel abhängt, der mit Hilfe eines Läuferlage-Gebers direkt meßbar ist. Bei denjenigen Ausgestaltungen des Systems, die von vornherein einen höheren Steueraufwand haben - wie etwa die oben erläuterte Maschine mit mehreren unabhängigen Feldsektoren - kann daher eine Synchronmaschine besonders vorteilhaft sein. Reluktanzmaschinen gehören im weiteren Sinn zu den Synchronmaschinen.

Insbesondere bei der Asynchronmaschine erfolgt die Steuerung der elektrischen Maschine vorzugsweise auf der Grund lage einer feldorientierten Regelung (sog. Vektorregelung) (Anspruch 12). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt. Diese Steuerungstechnik erlaubt es - obwohl die Stromverhältnisse im Läufer nicht direkt meßbar sind - ein gewünschtes Drehmoment mit hoher Genauigkeit einzustellen.

Bei dem System zur aktiven Verringerung von Drehungleichförmigkeiten handelt es sich i. a. um ein Hilfssystem, das z.B. im Triebstrang eines Kraftfahrzeugs mit einem Verbrennungsmotor als Hauptsystem angeordnet ist. Wegen seines Hilfs-Charakters sollte es relativ zum Hauptsystem wenig Raum beanspruchen, sollte also möglichst kompakt aufgebaut sein. Die im folgenden genannten vorteilhaften Maßnahmen dienen - neben anderen vorteilhaften Zwecken - einem solch kompakten Aufbau.

Eine Maßnahme zur Erzielung hoher Kompaktheit liegt darin, daß die elektrische Maschine eine feine Polteilung, insbesondere wenigstens einen Pol pro 45°-Ständerwinkel aufweist (Anspruch 13). Bei einer kreisförmig geschlossenen (360°-)Maschine entspricht dies einer Gesamtzahl von wenigstens acht Polen. Besonders vorteilhaft sind noch feinere Polteilungen, entsprechend z.B. 10, 12, 14, 16 oder mehr Polen bei der kreisförmig geschlossenen Maschine. Eine feine Polteilung erlaubt es nämlich, die Wickelköpfe des Ständers klein auszubilden, und zwar sowohl in Axial- wie auch in Umfangsrichtung der Maschine, so daß die Maschine in Axialrichtung insgesamt kürzer ausgebildet sein kann.

Auch kann bei feinerer Polteilung der Ständerrücken für den magnetischen Rückfluß dünner (und damit auch leichter) ausgebildet sein, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Insgesamt führt somit eine feinere Polteilung zu einer kompakteren und leichteren Maschine. Daneben sind wegen der geringeren Wickeldrahtlänge - kleinere Wickelköpfe benötigen weniger nicht-aktiven Wicklungsdraht - die Ohmschen Verluste geringer. Da ferner das Streufeld (das den Blindleistungsanteil wesentlich bestimmt) von der Wickelkopffläche abhängt, ist es bei feiner Polteilung relativ gering. Ein geringes Streufeld ist insbesondere bei der Drehungleichförmigkeits-Verringerung vorteilhaft, da hier - anders als bei einer üblichen elektrischen Maschine- dauernd zwischen Motor- und Generatorbetrieb hin- und hergewechselt wird und bei dem damit einhergehenden Umpolen laufend Blindleistung aufgebracht werden muß.

Bei schnell laufenden Drehfeld-Maschinen sind feine Polteilungen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz (Anspruch 14).

Um den Einfluß von Wirbelströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 mm oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt (Anspruch 15).

Als weitere Maßnahme, die zu einer kompakten Ausbildung beiträgt, weist die elektrische Maschine vorteilhaft eine innere Fluidkühlung auf (Anspruch 16). Bei dem Fluid kann es sich um Gas (z.B. Luft), vorteilhaft um Flüssigkeit (z.B. Öl) handeln. Eine sehr effektive Kühltechnik besteht darin, die Maschine im Inneren ganz unter Öl zu setzen. Ein Nachteil hiervor ist jedoch, daß oberhalb ca. 500 U/min Turbulenzverluste auftreten, die oberhalb ca. 2000 U/min merkliche Ausmaße annehmen können. Um dem zu begegnen, erfolgt die Zufuhr des Kühlfluids vorteilhaft verlustleistungs- und/oder drehzahlabhängig, wobei es sich bei der Fluidkühlung vorzugsweise um eine Sprühfluidkühiung handelt. In der Maschine befindet sich dann immer nur im wesentlichen soviel Kühlfluid, wie momentan zur Abfuhr der Verlustleistung benötigt wird. Bei sehr hohen Verlustleistungen und/oder niedrigen Drehzahlen kann die ganze Maschine unter Öl gesetzt sein. Die Sprühfluidkühlung stellt eine besonders gute Verteilung des Fluids sicher.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist (Anspruch 17).

Wie oben ausgeführt wurde, können an einer Welle mit Drehungleichförmigkeiten oft auch Radialschwingungen auftreten, insbesondere bei Kurbelwellen von Verbrennungsmotoren. Um robust gegenüber Radialschwingungen zu sein, ist das System vorzugsweise so ausgebildet, daß die elektrische Maschine stark im Bereich magnetischer Sättigung arbeitet. Ein Maß für die magnetische Sättigung ist der Strombelag (bei maximalem Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm (Anspruch 18). Das Arbeiten stark im Sättigungsbereich erlaubt es, die Maschine mit einem relativ weiten Luftspalt auszubilden. Änderungen des Luftspaltes - wie sie bei Radialschwingungen auftreten - wirken sich wegen des Betriebs im Sättigungsbereich kaum aus. Neben der Robustheit gegenüber Radialschwingungen erlaubt diese Maßnahme auch eine Herabsetzung der Genauigkeitsanforderungen und damit eine beträchtliche Vereinfachung der Fertigung der elektrischen Maschine.

Eine derart kompakte aufgebaute elektrische Maschine hat im allgemeinen eine relativ geringe Induktivität. Um hier dennoch beispielsweise mit Hilfe einer getakteten Spannung einen möglichst genau sinusförmigen Strom zum Erzeugen der elektrischen Dreh- bzw. Wanderfelder zu erzielen, arbeitet der Wechselrichter vorteilhaft zumindest zeitweise mit einer Taktfrequenz größer 10 kHz, insbesondere 10 kHz bis 100 kHz. Diese Maßnahme ist auch vorteilhaft zur Erzielung einer hohen zeitlichen Auflösung des Systems: Beispielsweise kann man mit einer Taktfrequenz von 20 kHz eine zeitliche Auflösung im Drehmomentverhalten der elektrischen Maschine von 2 kHz erzielen, mit der man eine Drehungleichförmigkeit bei 200 Hz wirksam verringern kann (200 Hz entsprechen zum Beispiel der vierten Ordnung bei 3000 U/min). Eine hohe Taktfrequenz hat ferner auch den Vorteil, eine kompakte Bauweise des Wechselrichters selbst zu erlauben: Denn beispielsweise bei einem Spannungszwischenkreis-Wechselrichter ist die Kapazität im Zwischenkreis, welche den elektronischen Schaltern des Wechselrichters die Zwischenkreisspannung bereitstellt, umgekehrt proportional zur Frequenz, so daß bei höherer Taktfrequenz hierfür eine kleinere Kapazität ausreicht. Die kleineren Zwischenkreiskondensatoren können mit kurzen Leitungswegen unmittelbar neben den elektronischen Schaltern angeordnet werden. Ferner kann eine nötige EMV-Filterung (EMV: Elektromagnetische Verträglichkeit) des Wechselrichters nach außen kompakter ausgeführt sein, da die Größe der Filter umgekehrt proportional zur Taktfrequenz ist.

Als weitere vorteilhafte Maßnahme zur Erzielung einer kompakten Bauweise des Wechselrichters sind elektronische Schalter des Wechselrichters fluidgekühlt, vorzugsweise siedebadgekühlt (Anspruch 19). Als Siedebad-Kühlmittel kann beispielsweise ein Fluorkohlenwasserstoff verwendet werden. Bei der Siedebadkühlung verdampft das Kühlmittel an Wärmepunkten und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper. Daneben hat sie den Vorteil, daß zur Erreichung auch hoher Kühlleistung relativ geringe Temperaturdifferenzen ausreichen: Während bei einer Luftkühlung üblicherweise eine Temperaturdifferenz von 40° C zwischen Kühloberfläche und dem Gehäuse eines zu kühlenden Chips nötig ist, reicht hier bereits eine Differenz von 2-10° C, insbesondere ungefähr 5° C aus. Als Folge sind hohe Umgebungstemperaturen tolerabel, beispielsweise bei einer Chiptemperatur von 65° C eine Umgebungstemperatur bis 60° C. Die Abwesenheit von Kühlkörpern und die hohe erzielbare Kompaktheit ermöglicht ferner eine hohe Rüttelfestigkeit; daneben erlaubt das Siedebad die Schaffung einer sauerstofffreien Atmosphäre im Bereich der elektronischen Bauelemente des Wechselrichters, was sich insgesamt lebensdauerverlängernd auswirkt. Das den Kühlraum bildende Gehäuse kann - wenn es aus leitendem Material ausgeführt ist - auch als Abschirmung dienen. Elektrische Zwischenkreis-Speicherelemente zum Bereitstellen zu taktender Spannung bzw. zu taktenden Stroms können innerhalb des Kühlgehäuses angeordnet sein, wodurch sich kurze Leitungswege ergeben können. Ein ggf. gesonderter elektrischer Bremsenergie-Speicher kann innerhalb oder außerhalb des Kühlgehäuses angeordnet sein. Die im letzteren Fall möglicherweise relativ hohen Zuleitungsinduktivitäten stören nicht, da der Bremsenergie-Speicher auf einer relativ "langsamen" Zeitskala arbeitet.

Eine weitere kühltechnisch vorteilhafte Maßnahme besteht darin, mehrere elektronische Schalter des Wechselrichters, insbesondere 2 bis 20 und mehr, parallel zu schalten (Anspruch 20). Die Parallelschaltung führt zu einer verteilten Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter(MOS)-Feldeffekttransistoren, bipolare Transistoren und/oder bipolare Transistoren mit isoliertem Gateanschluß (IGBTs) (Anspruch 21). Unter "schnellen" Halbleiterschaltern werden insbesondere solche verstanden, die maximale Taktfrequenzen von 10 bis 100 kHz oder mehr erlauben. MOS-Feldeffekttransistoren haben bei hohen Taktfrequenzen die relativ geringsten Verluste. Sie weisen eine ohmsche Charakteristik auf (während andere Halbleiterbauelemente im allgemeinen eine feste Verlustcharakteristik haben), so daß im Teillastbetrieb die Verluste relativ gering sind.

Der Wechselrichter erzeugt die für die magnetischen Felder der elektrischen Maschine benötigten Spannungen und/oder Ströme durch Sinusbewerte Pulsmodulation, z.B. Pulsweiten- oder Pulsamplitudenmodulation. Bei konstanter Zwischenkreisspannung lassen sich durch sinusbewertete Pulsweitenmodulation bei hohen Taktfrequenzen aufgrund der Maschineninduktivität nahezu sinusförmige Ströme beliebig einstellbarer Frequenz, Amplitude und/oder Phase erzeugen. Bei der Pulsamplitudenmodulation geht man beispielsweise aus von einem Wechselrichter mit variabler Zwischenkreisspannung und erzeugt so Pulse verschiedener Amplituden.

Zur optimalen Ausnutzung des z.B. in einem Kraftfahrzeug zur Verfügung stehenden Bauraumes ist es vorteilhaft, daß in die elektrische Maschine, und zwar insbesondere in deren Läufer, eine Kupplung, vorzugsweise eine Fahrkupplung integriert ist (Anspruch 22). Beispielsweise bei einer linear-motorähnlich aufgebauten Asynchron- und Synchronmaschine mit innenliegendem Läufer kann der Läufer in seinem inneren Bereich funktionslos sein und so zur Aufnahme z.B. einer schaltbaren kraftschlüssigen Kupplung hohl ausgebildet sein. Durch diese Maßnahme ist es möglich, daß die elektrische Maschine samt integrierter Kupplung in Axialrichtung nur so viel wie oder kaum mehr Raum in Anspruch nimmt als bei einem herkömmlichen Kraftfahrzeug die Kupplung alleine benötigt. Aufgrund des reduzierten verfügbaren Durchmessers und zur Minimierung des Massenträgheitsmomentes ist eine Ausführung als Mehrscheiben- und/oder Lamellenkupplung bevorzugt. Ist die integrierte Kupplung als Naßkupplung ausgebildet, kann das Kupplungsfluid auch für die Kühlung der elektrischen Maschine sorgen. Die Betätigung der Kupplung kann mechanisch, elektrisch, magnetisch, elektromagnetisch, hydraulisch, pneumatisch oder mit Mischformen hiervon erfolgen.

Um bei dem System zu jedem Zeitpunkt die momentane Winkellage der Welle zu kennen, ist die elektrische Maschine oder die Welle vorteilhaft mit einem Läuferlage- bzw. Wellenlage-Geber ausgerüstet (Anspruch 23). Aus der Information über die momentane Winkellage kann auf die momentane Winkelgeschwindigkeit und -beschleunigung und damit auf momentane Drehungleichförmigkeiten geschlossen werden. Auf dieser Information kann - wie oben ausgeführt wurde - bei einem geregelten System die Drehungleichförmigkeits-Verringerung basieren. Bei einem gesteuerten System wird die Information über die momentane Winkellage und ggf. die momentane mittlere Drehzahl gebraucht, um den richtigen Erwartungswert aus dem Kennfeld auszulesen. Die Information über die momentane mittlere Drehzahl wird auch zur Bestimmung der in der Maschine benötigten magnetischen Felder verwendet, ebenso bei einer Synchronmaschine die Information über die momentane Winkellage des Läufers. Zur Gewinnung einer möglichst genauen Winkellage-Information kann insbesondere ein Drehtransformator (ein sog. Resolver) dienen, also ein Transformator mit winkelabhängigem Übertragungsverhältnis. Auch hochauflösende Kodierer sind für diesen Zweck einsetzbar, z.B. eine Kombination aus einem hochauflösenden Inkrementalgeber und einem einfachen Absolutgeber.

Die elektrische Maschine kann so gestaltet sein, daß sie auch als elektromagnetische Kupplung im Antriebsstrang und/oder als aktive Getriebe-Synchronisiereinrichtung oder als Teil hiervon wirkt. Hierzu kann beispielsweise die vom Verbrennungsmotor kommende Antriebswelle mit dem Läufer und die zum Getriebe führende Abtriebswelle mit dem Ständer, der hier drehbar gelagert ausgeführt ist, gekoppelt sein (oder mit umgekehrten Zuordnungen von Läufer und "Ständer"). Die Maschine entspricht z.B. einer normalen Maschine mit Läufer und Ständer, welche zusätzlich zur Läuferrotation als Ganzes drehbar ist. Die als Ganzes drehbare Maschine kann zwischen Läufer und "Ständer" positive und negative Relativdrehmomente erzeugen. Auf diese Weise kann beliebiger (auch verschwindender) Kupplungsschlupf eingestellt werden sowie eine aktive Beschleunigung oder Bremsung der zum Getriebe führenden Welle zwecks Getriebesynchronisation erzielt werden.

Die elektromagnetische Kupplungsfunktion kann auch vorteilhaft für eine modifizierte Form des Startens eingesetzt werden. Denn zum Direktstarten des Antriebsaggregats müssen relativ große Drehmomente aufgebracht werden. Als Alternative für den Fall kleinerer hierfür nicht ausreichender Drehmomente kann die elektrische Maschine vorteilhaft als Schwungmassen-Starter mit elektromagnetisch kuppelbarer Schwungmasse ausgebildet sein. Als Schwungmasse dient vorzugsweise der Läufer bzw. der Ständer, ggf. zusammen mit der daran anschließenden, zum Getriebe führenden Welle. Bei freigeschaltetem Gang läßt sich diese in Abstützung gegen die Massenträgheit der Triebwelle und die Kompression des Verbrennungsmotors elektromotorisch auf hohe Drehzahlen hochdrehen. Durch "elektromagnetisches Einkuppeln" mit Hilfe der elektrischen Maschine selbst wird die Schwungmasse schnell abgebremst und dadurch die Triebwelle derart beschleunigt, daß der Verbrennungsmotor startet.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine schematische beispielhafte Darstellung der Funktionsweise des Systems zur aktiven Verringerung von Drehungleichförmigkeiten;
- Fig. 2: eine unmaßstäblich-schematische Darstellung einer Ausführungsform des Systems;
- Fig. 3: eine schematische Schnittdarstellung einer elektrischen Maschine mit Schnittebene senkrecht zur Axialrichtung zur Veranschaulichung verschiedener bei dem System verwendbaren Maschinentypen;
- Fig. 4: eine schematische Schnittdarstellung einer elektrischen Maschine mit integrierter Reibkupplung mit Schnittebene in Axialrichtung;
- Fig. 5: einen schematischen Schaltplan eines bei dem System verwendeten Wechselrichters;
- Fig. 6: eine schematische Darstellung einer elektrischen Maschine mit drehbaren elektromagnetischen Wirkeinheiten;

In den Figuren tragen im wesentlichen funktionsgleiche Teile gleiche Bezugszeichen.

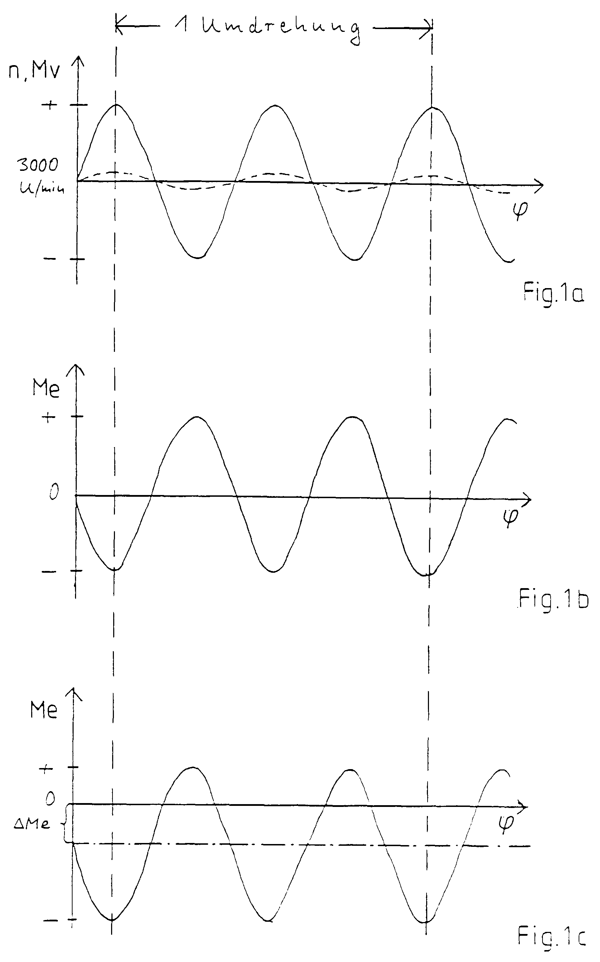

Fig. 1a veranschaulicht (mit durchgezogener Linie) die Drehzahl n einer Welle als Funktion des Kurbelwellenwinkels ϕ. Die Welle führt um eine mittlere Drehzahl (hier 3000 Umdrehungen pro Minute) periodisch Drehzahlschwankungen zu kleineren und größeren Drehzahlen hin aus, welche in diesem idealisierten Beispiel insgesamt einen im wesentlichen sinusförmigen Verlauf haben. Bei der Welle handelt es sich beispielsweise um die Kurbelwelle eines Vierzylinder-Viertakt-Verbrennungsmotors eines Kraftfahrzeugs, die in der zweiten Ordnung (d.h. bei einer Frequenz von 100 Hz) eine relativ große, von den Gas- und Massenkräften herrührende Drehungleichförmigkeit aufweist. Zur Veranschaulichung ist auch das für eine Umdrehung der Welle benötigte Winkel intervall eingezeichnet. Im allgemeinen treten bei einer Welle außerdem (hier nicht dargestellte) Drehungleichförmigkeiten höherer Ordnungen und solche stochastischer Natur auf. Ihr Verlauf ist also i.a. nicht sinusförmig.

Im wesentlichen proportional zu den Drehungleichförmigkeiten sind Schwankungen des Drehmoments Mv des Verbrennungsmotors um ein mittleres Drehmoment. Die durchgezogene Linie in Fig. la veranschaulicht damit auch den Verlauf des Motor-Drehmoments Mv als Funktion des Kurbelwellenwinkels ϕ.

Fig. 1b veranschaulicht das Gesamt-Drehmoment Me als Funktion des Wellenwinkels ϕ, das von einer mit der Welle gekoppelten elektrischen Maschine aufgebracht wird. Der Verlauf des Maschinendrehmoments Me entspricht weitgehend dem der Drehungleichförmigkeit und des Motor-Drehmoments Mv, ist jedoch entgegengesetzt gerichtet oder gegenphasig.

D.h., bei einer Drehungleichförmigkeit zu höheren Drehzahlen hin (sog. positive Drehungleichförmigkeit) erzeugt die elektrische Maschine ein die Welle bremsendes Drehmoment (sog. negatives Drehmoment), wohingegen sie bei einer Drehungleichförmigkeit zu niederen Drehzahlen hin (sog. negative Drehungleichförmigkeit) ein antreibendes Drehmoment (sog. positives Drehmoment) erzeugt. Der Betrag des Drehmoments Me ist so gewählt, daß die Drehungleichförmigkeit - und die zu ihr proportionale Schwankung des Drehmoments Mv - durch dessen Wirkung wesentlich verringert wird oder sogar praktisch verschwindet, wie in Fig. la durch die gestrichelte Linie veranschaulicht ist.

Bei der in Fig. 1b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also in dieser Betriebsweise als reiner Drehungleichförmigkeits-Verringerer mit schnell variierendem Drehmoment, ohne Erzeugung eines Zusatz-Drehmoments.

Ein Beispiel für eine demgegenüber modifizierte Betriebsweise des Systems mit Zusatz-Drehmoment ist in Fig. 1c gezeigt: Der zeitliche Verlauf des Gesamt-Drehmoments Me entspricht dem von Fig. 1b, es ist jedoch global um einen bestimmten Betrag ΔMe (den sog. Hub) in negative Richtung verschoben. Der Hub ΔMe wird im allgemeinen langsam variieren, in dem hier dargestellten kurzen Zeitrahmen von ungefähr einer Umdrehungsperiode ist er jedoch in guter Näherung konstant. Der Hub ΔMe ist hier kleiner als die Amplitude der schnelle Variation des Drehmoments, so daß das Gesamt-Drehmoment Me alternierend positive und negative Werte annimmt. Gemittelt über die schnelle Drehmomentvariation erhält man ein konstantes Drehmoment -ΔMe. Dem Verbrennungsmotor wird also im Mittel mechanische Energie entzogen, die weitgehend in elektrische Energie umgewandelt und dem System entnommen wird. Die elektrische Maschine hat also in dieser Betriebsart neben der Funktion als Drehungleichförmigkeits-Verringerer die Funktion eines elektrischen Generators, der als Bremse wirken kann und Strom z.B. zum Ausgleichen der Betriebsverluste des Systems, zum Laden der Fahrzeugbatterie und/oder zum Betreiben elektrischer Verbraucher liefern kann.

Falls der Hub ΔMe größer als die Amplitude zur Verringerung der Drehungleichförmigkeit ist, wirkt die elektrische Maschine nur noch bremsend und nicht mehr antreibend, wobei die Bremswirkung in ihrem Betrag entsprechend Fig. 1b und lc gegenphasig zur Drehungleichförmigkeit variiert.

Allein durch eine entsprechende Einstellung der (Software-)Steuerung der elektrischen Maschine - ohne jegliche konstruktive (Hardware-)Änderungen - sind kleine und sehr große Generatorleistungen einstellbar. Begrenzend wirkt nur die Größe der elektrischen Maschine. Damit kann ein und der selbe Maschinentyp beispielsweise für kleine und große Kraftfahrzeugtypen ohne konstruktive Anpassung verwendet werden.

Der globale Drehmomentverlauf kann auch in positiver Richtung verschoben sein (positiver Hub). Die elektrische Maschine arbeitet dann neben ihrer Funktion als Drehungleichförmigkeits-Verringerer als (antreibender) Motor, z.B. um den Verbrennungsmotor bei einer Fahrzeugbeschleunigung zu unterstützen.

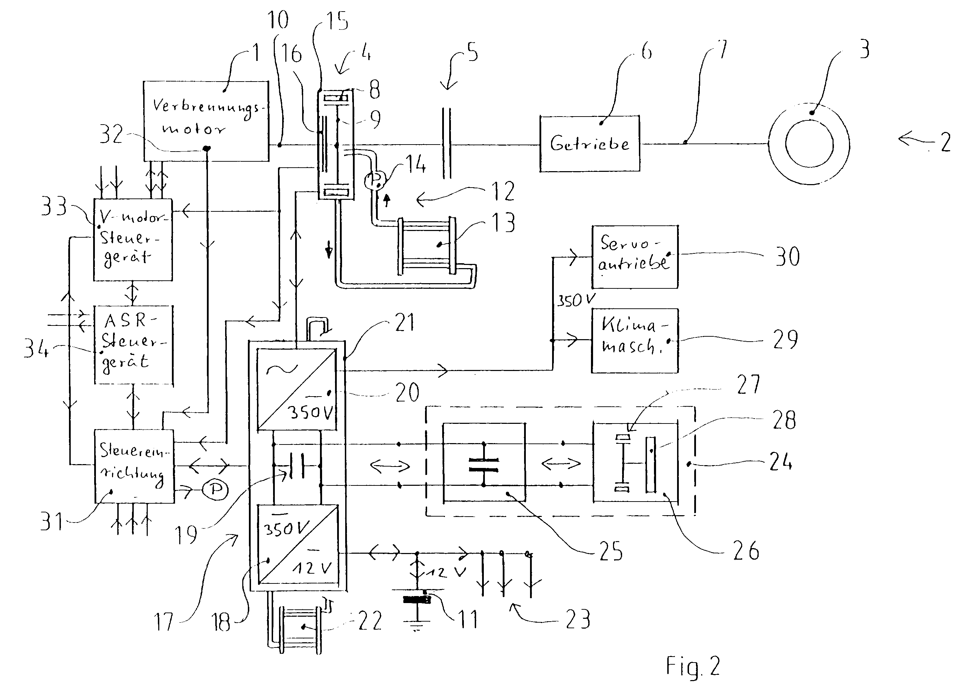

Das in Fig. 2 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 zunächst eine elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei der Kupplung 5 und dem Getriebe 6 kann es sich um eine Reibungskupplung und ein Schaltgetriebe handeln; alternativ sind z.B. eine automatische Kupplung oder Wandlerkupplung, jeweils mit Schaltgetriebe oder automatischem Getriebe möglich. Bei anderen (nicht gezeigten) Ausführungsformen ist im Antriebsstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlauf des Verbrennungsmotors 1 zu vermeiden.

Die elektrische Maschine 4 - hier eine Drehstrom-Wanderfeld-Maschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungs gehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren also gemeinsam, ohne Zwischenschaltung eines Getriebes.

Die elektrische Maschine 4 erfüllt mehrere Funktionen: Sie fungiert einerseits als Drehungleichförmigkeits-Verringerer, wie im Zusammenhang mit Fig. 1 bereits erläutert wurde. Andererseits fungiert sie als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine 4 als Zusatzmotor ("Booster") fungieren, z.B. um den Verbrennungsmotor beim Beschleunigen des Fahrzeugs zu unterstützen. Auch dient sie als Starter für den Verbrennungsmotor und kann somit auch einen herkömmlicherweise beim Kraftfahrzeug gesondert vorgesehenen Starter ("Anlasser") ersetzen. Schließlich fungiert sie aufgrund des Massenträgheitsmoments des Läufers 9 als Schwungrad und kann so das bei herkömmlichen Kraftfahrzeugen i.a. vorhandene, auf der Kurbelwelle sitzende Schwungrad ersetzen.

Die elektrische Maschine 4 ist durch eine Sprühfluidkühlung 12 innengekühlt. Nach Durchlaufen eines Kühlers 13 und einer Pumpe 14 wird die Kühlflüssigkeit - hier ein geeignetes Öl - an den Läufer 9, und zwar in der Nähe von dessen Rotationsachse, gesprüht. Sie wandert aufgrund der Läuferrotation fliehkraftbedingt nach außen und kühlt dabei Läufer 9 und Ständer 8, und verläßt dann ein Gehäuse 15 der elektrischen Maschine 4, um in einem geschlossenen Kreislauf wieder in den Kühler 13 einzutreten. Der Kühlmittelfluß erfolgt verlußtleistungs- und drehzahlabhängig durch entsprechende Steuerung der Pumpe 14, derart, daß sich jeweils im wesentlichen nur eine gerade benötigte Mindestmenge des Kühlfluids im Inneren des Gehäuses 15 befindet. Ein (nicht gezeigtes) Ausgleichsgefäß erlaubt diese Variation der Kühlfluidmenge im Gehäuse 15. Bei anderen (nicht gezeigten) Ausführungsformen ist die elektrische Maschine (oder nur der Läufer) in ein Kupplungs- und/oder Getriebegehäuse integriert und wird durch ein darin befindliches Schmier- und/oder Kühlfluid (z.B. Kupplungs- oder Getriebeöl) mit gekühlt.

Die elektrische Maschine 4 ist außerdem mit einem Drehtransformator 16 (sog. Resolver) ausgerüstet, der vorzugweise mehr als 8 Pole, hier z.B. 12 Pole auweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet.

Ein Wechselrichter 17 liefert dem Ständer 8 der elektrischen Maschine 4 bei einer sehr hohen Taktfrequenz (z.B. 100 kHz) sinusbewehrt pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist.

Der Wechselrichter 17 ist ein Spannungszwischenkreis-Pulswechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 350 V) und in umgekehrter Richtung umsetzt, einen elektrischen Zwischenkreisspeicher 19, hier ein Kondensator bzw. eine Anordnung parallel geschalteter Kondensatoren, und einen Maschinenwechselrichter 21 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem metallischen Gehäuse 21 hermetisch eingeschlossen, welches mit einem geeigneten Siedekühlmittel gefüllt ist. Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem geschlossenen Kreislauf in das Gehäuse 21 zurückkehren. Das Gehäuse 21 mit dem Kühlkreislauf ist hermetisch dicht.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechselrichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen. Bei anderen (nicht gezeigten) Ausführungsformen befindet sich die Fahrzeugbatterie auf Zwischenkreisniveau und ist direkt mit dem Zwischenkreis gekoppelt.

Der Zwischenkreisspeicher 19 ist verbunden mit einem externen Zusatzspeicher 24, bei dem es sich um einen elektrischen Speicher, hier eine Zusatzkapazität 25, und/oder einen Schwungradspeicher 26 handeln kann. Der Zusatzspeicher 24 hat in erster Linie die Aufgabe, die beim Drehungleichförmigkeits-Verrringern in einer Bremsphase gewonnene Energie zwischenzuspeichern und für die anschließende Antreibphase wieder abzugeben. Daneben kann er auch der Speicherung derjenigen Energie dienen, die bei anderen, durch die elektrische Maschine 4 vermittelten Bremsvorgängen anfällt. Schließlich kann er die Fahrzeugbatterie 11 beim Startvorgang des Verbrennungsmotors 1 entlasten, indem dieser Energie nur langsam entnommen und im Zusatzspeicher 24 gespeichert wird. Hier steht sie dann für eine schnelle Entnahme beim Startvorgang zur Verfügung.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 µF), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechselrichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheits moment der Schwungmasse 28 beträgt vorzugsweise 0,05 bis 2 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Bei anderen (nicht gezeigten) Ausführungsformen ist kein gesonderter Zusatzspeicher 24 vorgesehen. Hier ist der Zwischenkreisspeicher 19 so dimensioniert und ggf. außerhalb des Wechselrichters 17 angeordnet, daß er die Funktionen des Zusatzspeichers 24 mit übernehmen kann.

Der Zwischenkreis mit seinem hohen Spannungsniveau (hier 60 V oder 350 V) versorgt verschiedene Hochleistungsverbraucher, wie eine Klimamaschine 29 und Servoantriebe 30 mit elektrischer Energie. Während derartige Hochleistungsverbraucher herkömmlicherweise durch mechanische Kopplung vom Verbrennungsmotor 1 angetrieben werden, erlaubt das hier zur Verfügung stehende hohe Spannungsniveau einen wirkungsgradmäßig günstigeren, rein elektrischen Antrieb.

Eine Steuereinrichtung 31 gibt dem Wechselrichter 17 durch entsprechende Ansteuerung seiner Halbleiterschalter zu jedem Zeitpunkt vor, welche Amplitude, Frequenz und Phase die von ihm zu erzeugende Wechselspannung haben soll. Die Steuereinrichtung 31, die beispielsweise durch ein entsprechend programmiertes Mikrocomputer-System gebildet sein kann, bestimmt zunächst den Betrag und die Richtung des Drehmoments, welches die elektrische Maschine 4 zu einem bestimmten Zeitpunkt erzeugen soll. Sie kann dies z.B. mit Hilfe einer Kennfeldsteuerung tun, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält und aus einem gespeicherten Kennfeld die momentan zu erwartende Drehungleichförmigkeit in Abhängigkeit von diesen Betriebsparametern ermittelt. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/oder durch Auswertung der momentan im Verbrennungsmotor 1 vorliegenden Gasdrücke, welche mit Hilfe von Gasdrucksensoren 32 detektierbar sind, sowie durch Erfassung der momentanen Drehmoments des Verbrennungsmotors 1 mit Hilfe einer (nicht gezeigten) Drehmomentnabe im Antriebsstrang. Möglich ist auch eine Kombination von Regelung und Steuerung. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, dem ggf. ein positives oder negatives Zusatz-Drehmoment gewünschter Stärke additiv überlagert wird. Zum Starten des Verbrennungsmotors 1 kann das Soll-Drehmoment auf der Grundlage gespeicherter Werte bestimmt werden, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt.

In einem zweiten Schritt bestimmt die Steuereinrichtung 31, welche Amplitude, Frequenz und Phase der Spannung bzw. des Stroms vom Wechselrichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet.

In Fig. 2 ist die Steuereinrichtung 31 als außerhalb des Wechselrichtergehäuses 21 angeordnet dargestellt. Um die Zuleitungsinduktivitäten gering zu halten und auch an der Siedebadkühlung zu partizipizieren, ist sie jedoch bei anderen (nicht gezeigten) Ausführungsformen im Inneren des Wechselrichtergehäuses 21 angeordnet.

Die Steuereinrichtung 31 teilt verschiedene, zur Erfüllung ihrer Steueraufgaben dienende Sensoren bzw. davon abgeleitete Sensorinformationen mit einem Motorsteuergerät 33 zur Steuerung des Verbrennungsmotors 1. Im einzelnen handelt es sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe).

Außerdem kommuniziert die Steuereinrichtung 31 mit einer Vielzahl weiterer Steuergeräte: ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 eine entsprechende globale Drehmomentverstellung ΔMe (siehe Fig. 1c) veranlassen kann. Das Motorsteuergerät 33 gibt der Steuereinrichtung 31 vor, ob die elektrische Maschine 4 zusätzlich zu ihrer Schwingungsverringerungs-Funktion fahrzeugbeschleunigend oder -bremsend wirken soll, so daß diese eine entsprechende globale Drehmomentverschiebung ΔMe veranlassen kann und ggf. die Drehungleichförmigkeits-Verringerungsfunktion vorübergehend abschalten kann. Entsprechend gibt ein ASR-Steuergerät 34 (ASR=Antriebs-Schlupf-Regelung) der Steuereinrichtung 31 bei Vorliegen von Antriebsschlupf vor, daß die elektrische Maschine 4 vorübergehend als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupfinformation an das Motorsteuergerät 33 übergeben, um außerdem eine Verringerung des Verbrennungsmotor-Drehmoments zu veranlassen. Das Motorsteuergerät 33 kann auch eine automatische Start-Stop-Steuerung durchführen und der Steuereinrichtung 31 vorgeben, ob die elektrische Maschine 4 den Verbrennungsmotor 1 starten soll.

Bei jeder Art von Bremsen gewonnene Energie wird im Zusatzspeicher 24 gespeichert, um zum späteren Antreiben der elektrischen Maschine 4 wiederverwendet oder der Fahrzeugbatterie 11 zugeleitet zu werden.

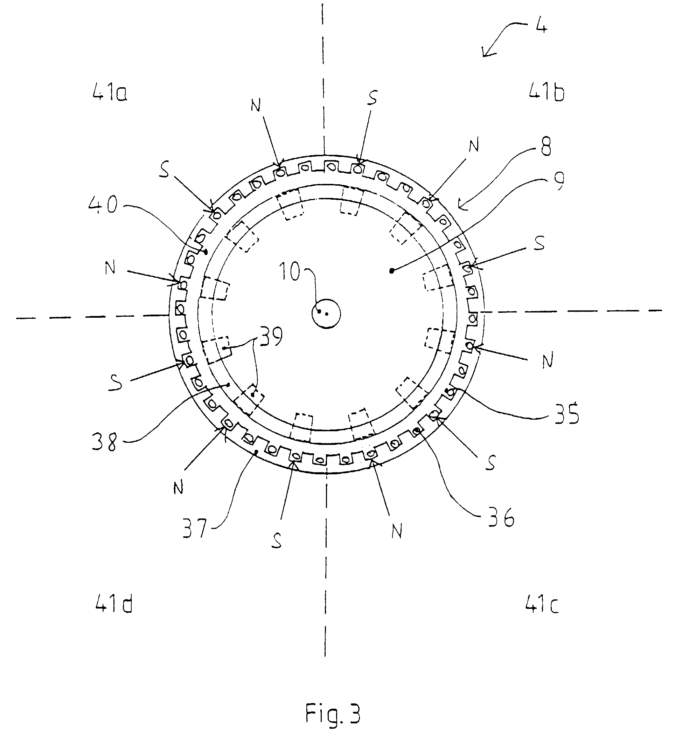

Die in Fig. 3 näher dargestellte elektrische Maschine 4 ist bürsten- bzw. schleiferlos und damit verschleißfrei. Sie hat einen Außendurchmesser von ungefähr 250 mm und eine Länge in Axialrichtung von 55 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8, welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffektenpro Pol wenigstens 6, vorzugsweise neun Nuten vorhanden.) Die Pole laufen mit der Drehstrom-Oszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender Rücken 37 ist in Radialrichtung relativ dünn, seine Dicke beträgt (an der Stelle einer Nut 35) vorzugsweise 3-25 mm. Der Ständer 8 ist aus dünnen Statorblechen (die Dicke beträgt hier 0,25 mm) aus einem Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Bei der Synchronmaschine trägt der Läufer 9 eine entsprechende Zahl von Polen wie der Ständer 8 (hier zwölf Pole), die durch Permanentmagnete oder entsprechend erregte Spulen gebildet sein können. In Fig. 3 ist die Synchronmaschine ebenfalls veranschaulicht, indem die bei ihr vorhandenen Läuferpole (Bezugsziffer 39) schematisch angedeutet sind.

Der Luftspalt 40 zwischen Läufer 9 und Ständer 8 ist relativ groß; seine Weite beträgt 0,25 bis 2,5 mm, vorzugsweise 0,5 bis 1,5 mm.

Bei anderen (nicht gezeigten) Ausführungsformen ist der Läufer außenliegend und der Ständer innenliegend.

Obwohl Fig. 3 eigentlich eine Drehfeldmaschine mit einem durchgehenden 360°-Drehfeld darstellt, kann sie auch der Veranschaulichung einer Sektormaschine mit mehreren unabhängigen Sektoren dienen. Bei unverändertem Ständerkörper sind bei der Sektormaschine vier Ständersektoren 41a bis 41d dadurch ausgebildet, daß sie jeweils eine eigene, in sich abgeschlossene Drei-Phasen-Ständerwicklung tragen, die elektrisch von den anderen unabhängig ist. Bei entsprechender Beschaltung mit vier unabhängigen Wechselrichtern erlaubt dies die Erzeugung von vier voneinander unabhängigen Wanderfeldern, die auch Radialschwingungen verringern können. Bei anderen (nicht gezeigten) Ausführungsformen ist nicht nur die einzelne Wicklung, sondern auch der Ständer körper in seiner räumlichen Ausbildung auf einen oder mehrere Sektoren beschränkt. Diese Maschinen ähneln einem bzw. mehreren gekrümmten Linearmotoren.

Bei anderen (nicht dargestellten) Ausführungsformen ist der Läufer 9 zugleich als passiver Schwingungstilger ausgebildet, indem er aus einem zentralen Teil und einem dieses konzentrisch umgebenden äußeren Teil aufgebaut ist, die z.B. mittels einer dazwischen angeordneten Elastomerschicht elastisch miteinander gekoppelt sind.

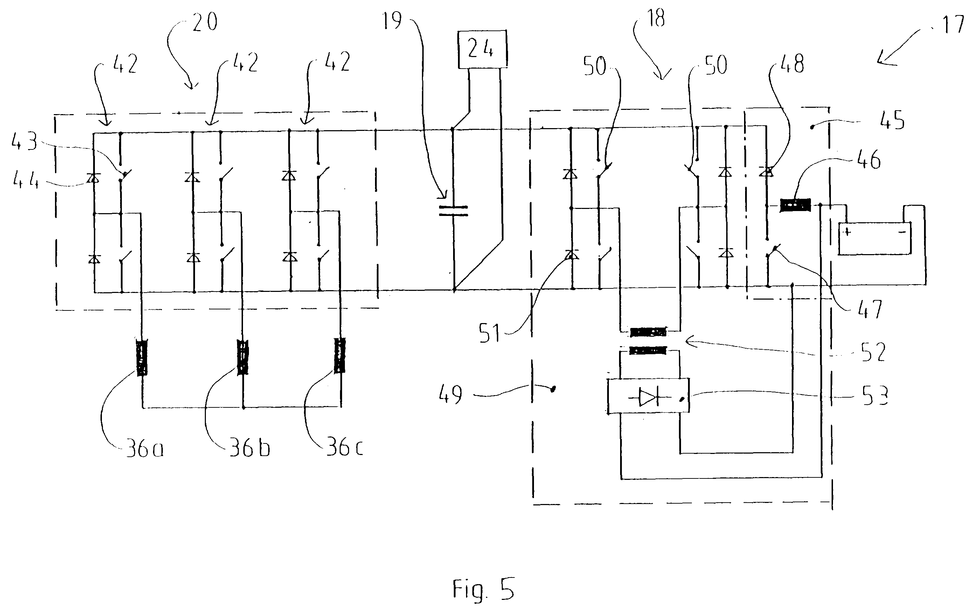

Bei der Ausführungsform gemäß Fig. 4 ist in der elektrischen Maschine 4 die Kupplung 5 integriert. Innerhalb des z.B. am Motor- oder Getriebegehäuse drehfest gelagerten Ständers 8 ist der Läufer 9 an seiner Peripherie einseitig über einen axial seitlich ausragenden Käfig 54 mit der Triebwelle 10 des Verbrennungsmotors 1 drehfest verbunden. Der Läufer 9 ist innen hohl und hat im wesentlichen die Form eines flachen Kreiszylinder-Mantels. In dem Hohlraum ist die Kupplung 5 - hier eine als Fahrkupplung fungierende Lamellenkupplung (Vielflächen-Reibscheibenkupplung) - angeordnet. Sie kann einen Kraftschluß zwischen der Triebwelle 10 mit dem Läufer 9 und einer in den Hohlraum ragenden Abtriebswelle 55 zum Getriebe 6 herstellen. Hierzu ist der Läufer 9 innenverzahnt und die Abtriebswelle 55 im Bereich des Hohlraums 55 außenverzahnt. In dem Raum dazwischen ist ein Scheibenpaket 56 angeordnet, dessen Scheiben 57 abwechselnd außen- und innenverzahnt sind, so daß abwechselnd jeweils eine Scheibe mit dem Läufer 9 (Außenlamelle 57a) und die nächste Scheibe mit der Abtriebswelle 55 (Innenlamelle 57b) formschlüssig verbunden ist. Ohne axialen Druck können die Außen- und Innenlamellen 57a, 57b praktisch frei gegeneinander rotieren, die Wellen 10, 55 sind dann entkuppelt. Preßt man die Außen- und Innenlamellen 57a, 57b mit Hilfe einer (nicht dargestellten) Druckvorrichtung (z.B. eines Winkelhebels) in Axialrichtung zusammen, stellen die entstehenden Reibkräfte den Kratfschluß zwischen den Wellen 10, 55 her, so daß sich das vom Verbrennungsmotor 1 und der elektrischen Maschine 4 erzeugte Drehmoment auf die Abtriebswelle 55 überträgt. Der Kraftschlußteil (d.h. hier das Scheibenpaket 56) der Kupplung 5 findet vollständig im Läufer 9 Platz, ragt also nicht etwa in Axialrichtung seitlich aus ihm heraus. Die Kupplung 5 ist als Naßkupplung ausgeführt. Das Kupplungsöl dient gleichzeitig der Kühlung der elektrischen Maschine 4. Bei anderen (nicht gezeigten) Ausführungsformen sind andere schaltbare kraftschlüssige Kupplungen integriert, z.B. eine Einscheiben-Kupplung in Trocken- oder Naßbauweise.

Andere Nutzungen des Hohlraums im Inneren der elektrischen Maschine 4 sind möglich: Bei anderen (nicht gezeigten) Ausführungsformen nimmt er beispielsweise die zweite, zum Schwungradspeicher 26 gehörige elektrische Maschine 27 samt Schwungmasse 28 oder ein mechanisch einkoppelbares Schwungrad auf.

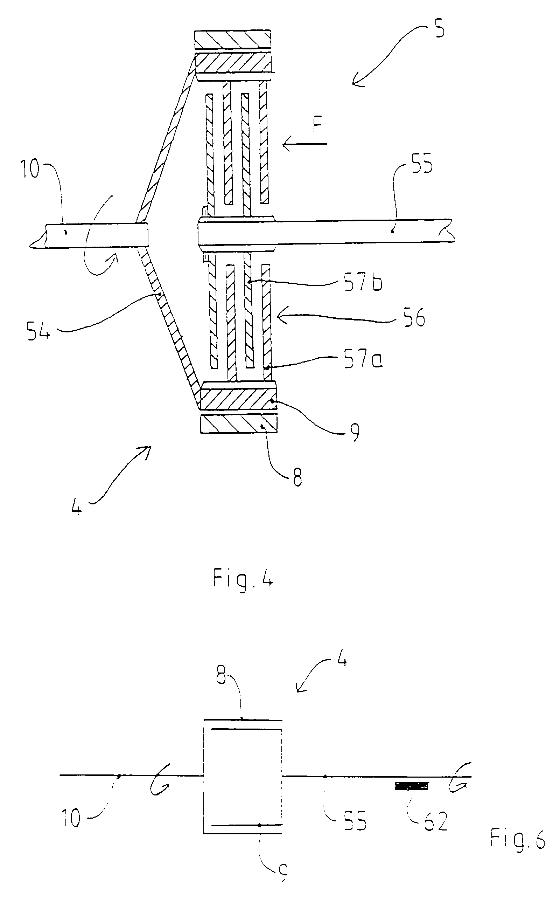

Fig. 5 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 parallelgeschaltet ist. Die Kapazität symbolisiert eine Parallelschaltung mehrerer Kondensatoren.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und dem Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60 V bzw. 350 V) bringen kann, und eine andere, welche - umgekehrt - elektrische Energie von dem hohen Spannungsniveau (60 V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlosse nem Schalter 47 fließt ein Kreisstrom vom Plus- zum Minus pol der Fahrzeugbatterie 11. Nach Öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

Fig. 6 zeigt eine elektrische Einzelmaschine 4, welche die Funktion einer elektromagnetischen Kupplung und/oder Synchronisiereinrichtung hat. Sie weist ein inneres und ein äußeres elektromagnetisches Wirkelement auf, die in Anlehnung an bei elektrischen Maschinen üblichen Bezeichnungsweisen hier Läufer 9 und Ständer 8' genannt werden. Der Läufer 9 ist drehfest mit der Abtriebswelle 55 und der Ständer 8' ist drehfest mit der Triebwelle 10 verbunden (bei anderen - nicht gezeigten - Ausführungsformen ist diese Zuordnung umgekehrt). Die elektrische Maschine 4 ist also zusätzlich zur Läuferdrehung als Ganzes drehbar; der Begriff "Ständer" ist also angesichts dessen Drehbarkeit nur in einem übertragenen Sinn zu verstehen. Während es bei einer feststehenden elektrischen Maschine - z.B. einer Drehfeld-Maschine - möglich ist, die Stromzufuhr auf das feststehende Wirkelement (d.h. den Ständer) zu beschränken und im drehbaren Wirkelement (d.h. im Läufer) Ströme ohne Stromzufuhr nur durch Induktion hervorzurufen, wird hier - wo beide Wirkelemente drehbar sind - wenigstens einem von ihnen (hier dem Ständer 8') Strom über drehbewegliche elektrische Verbindungen (z.B. über hier nicht gezeigte Schleifer/Schleifring-Kontakte) zugeführt. Die Abtriebswelle 55 ist mit einer mechanischen Kupplung, hier einer gegen das Fahrzeugchassis oder das Getriebegehäuse abgestützten Bremse 62 gegen Drehung festlegbar. Die gezeigte Ausführungsform hat keine Überbrückungskupplung, andere (nicht gezeigte) Ausführungsformen sind jedoch mit einer reib- oder kraftschlüssigen Überbrückungskupplung zur mechanischen Verbindung der Wellen 10, 55 ausgerüstet. Die Maschine 4 kann im oder am Motorgehäuse, Getriebegehäuse oder an beliebiger anderer Stelle im Antriebsstrang 2 plaziert sein.

In der Funktion als Schaltkupplung und ggf. als Anfahrkupplung wird ein Gleichlauf der Wellen 10, 55 durch eine solche Einstellung der drehmomenterzeugenden magnetischen Felder der Maschine 4 erzielt, daß Drehzahlgleichheit zwischen den Wellen 10,55 herrscht, also der Kupplungsschlupf zwischen Ständer 8' und Läufer 9 genau verschwindet. Bei einer Asynchronmaschine wird dies beispielsweise durch die Regelung bzw. Steuerung des magnetischen Schlupfes eines entgegen der Antriebsdrehmoment-Richtung umlaufenden Drehfelds geeigneter Frequenz und Amplitude erzielt. Eine (hier nicht dargestellte) formschlüssige Überbrückungskupplung eliminiert bei verschwindendem Kupplungsschlupf die elektromagnetischen Verluste.

Die aktive Getriebesynchronisierung - die bei Ausführungsformen der Einzelmaschine 4 auch ohne Kupplungsfunktion realisiert sein kann - erfolgt hier in Abstützung gegen die mit der variablen Drehzahl des Verbrennungsmotors 1 drehende Triebwelle 10. Der Beitrag dieser Drehung wird bei der Bestimmung und Steuerung der für die jeweilige Synchronisation nötigen Relativdrehzahl der Maschine 4 berücksichtigt.

Eine Verringerung von Drehungleichförmigkeiten der Triebwelle 10 kann im Stand des Fahrzeugs in Abstützung gegen den dann mit Hilfe der Bremse 62 gegen Drehung festgelegten Läufer 9 erfolgen. Bei angetriebener Fahrt können bei nicht eingekuppelter (oder nicht vorhandener) Überbrückungskupplung Drehungleichförmigkeiten der Abtriebswelle 55 durch schnelles Variieren des übertragenen Drehmoments verringert werden, und zwar durch dessen Verkleinerung (d.h. einer Vergrößerung des Kupplungsschlupfes) bei positiver Drehungleichförmigkeit und dessen Vergrößerung (d.h. einer Verkleinerung des Kupplungsschlupfes) bei negativer.

Zusatzbeschleunigung oder -bremsung ist bei nicht eingekuppelter Überbrückungskupplung durch Erzeugung entsprechenden Drehmomente - oder anders ausgedrückt - kleineren oder größeren Kupplungsschlupfes möglich. Die elektrische Maschine 4 kann in eine ASR-Regelung derart einbezogen sein, daß bei zu großem Antriebsrad-Schlupf der Kupplungsschlupf augenblicklich vergrößert und damit das an den Antriebsrädern anliegende Moment verkleinert wird. Eine Generatorfunktion zur Stromerzeugung wird durch dauernd aufrechterhaltenen Kupplungsschlupf erzielt.

Die elektrische Maschine 4 kann den Verbrennungsmotor 1 direkt in Abstützung gegen die durch die Bremse 62 festgelegte Abtriebswelle 55 starten. Bei einer anderen Ausführungsform, bei der die Maschine 4 hierfür kein ausreichendes Drehmoment aufbringt, kann sie unter Ausnutzung der elektromagnetischen Kupplungsfunktion als verschleißfreier Schwungradstarter dienen. Hierzu beschleunigt die elektrische Maschine 4 zunächst bei nicht eingelegtem Gang und gelöster Bremse 62 den dann freilaufenden Läufer 9 zusammen mit der Abtriebswelle 55 in Abstützung gegen die Triebwelle 10 und die Kompression des noch nicht laufenden Verbrennungsmotors 1 auf eine relativ hohe Drehzahl, z.B. auf 2000 U/min. Dann wird die elektrische Maschine 4 innerhalb kurzer Zeit so umgesteuert, daß sie ein bremsendes Moment, also Kraftschluß zwischen dem Läufer 9 und dem Ständer 8' herstellt. Dadurch werden der Läufer 9 mit der Abtriebswelle 55 und der Ständer 8' mit der Triebwelle 10 schnell auf eine gemeinsame mittlere Drehzahl (z.B. 800 U/min) gebracht und der Verbrennungsmotor 1 gestartet.

## Patentansprüche

1. System zur aktiven Dämpfung von Drehungleichförmigkeiten der Kurbelwelle (10) eines Verbrennungsmotors (1) oder einer damit gekoppelten Welle, mit
- einer elektrischen Drehfeldmaschine (4), die auf die Kurbelwelle (10) oder die Welle wechselnde Drehmomente aufbringt, so daß sie positiven und negativen Drehungleichförmigkeiten entgegenwirkt,
- wenigstens einem Wechselrichter (17), der die für die magnetischen Felder der elektrischen Maschine (4) benötigten Spannungen und/oder Ströme variabler Frequenz, Amplitude und/oder Phase durch sinusbewertete Pulsmodulation mit einer Taktfrequenz größer 10 kHz erzeugt;
- wobei der Wechselrichter (17) einen Zwischenkreis mit einem gegenüber einem Bordnetz erhöhten Spannungsniveau aufweist;
- und wobei der Wechselrichter (17) im Zwischenkreis mit einem Energiespeicher (19, 24) zum Zwischenspeichern von beim Aktivdämpfen anfallender Energie ausgerüstet ist;
- wobei sowohl die Energieentnahme aus dem Zwischenkreis im Motorbetrieb der elektrischen Maschine (4) als auch die Energieeinspeisung in den Zwischenkreis im Generatorbetrieb jeweils auf dem erhöhten Spannungsniveau erfolgt.

2. System nach Anspruch 1, bei welchem die elektrische Maschine (4) den wechselnden Drehmomenten zur Dämpfung von Drehungleichförmigkeiten zur zusätzlichen Erzielung einer antreibenden Wirkung oder einer bremsenden cder generatorischen Wirkung ein positives bzw. negatives Drehmoment überlagert.

3. System nach Anspruch 1 cder 2, bei welchem der Energiespeicher (24) ein Schwungradspeicher ist.

4. System nach einem der vorhergehenden Ansprüche, bei welchem die elektrische Maschine (4) außerdem die Funktion eines Starters hat.

5. System nach einem der vorhergehenden Ansprüche, bei welchem die elektrische Maschine (4) außerdem die Funktion eines Generators zur Stromversorgung hat.

6. System nach einem der vorhergehenden Ansprüche, bei welchem die elektrische Maschine (4) ein Beschleunigen und/oder Abbremsen der Kurbelwelle (10) bzw. der Welle herbeiführen oder unterstützen kann, um ein Fahrzeug zu beschleunigen bzw. abzubremsen und/oder um im Rahmen einer Anti-Schlupf-Regelung durch Bremsen den Schlupf eines Antriebsrades zu verringern.

7. System nach einem der vorhergehenden Ansprüche, bei welchem aus dem Zwischenkreis Hilfsmaschinen, wie Klimamaschinen (29), Servoantriebe (30), Pumpen, elektrisch auf einem hohen Spannungsniveau angetrieben werden.

8. System nach einem der vorhergehenden Ansprüche, bei welchem das Verringern von Drehungleichförmigkeiten durch Regelung, Steuerung, und zwar insbesondere Kennfeldsteuerung, adaptive Steuerung, und/oder Mischformen hiervon erfolgt.

9. System nach Anspruch 3, bei welchem der Gasdruck und/oder das momentane Drehmoment des Verbrennungsmotors (1) als Regelgröße zum Verringern von Drehungleichförmigkeiten dient.

10. System nach einem der vorhergehenden Ansprüche, bei welchem sie elektrische Maschine (4) einen Feldsektor (41) oder mehrere Feldsektoren (41) mit wenigstens teilweise unabhängigen Wanderfeldern aufweist, wobei das bzw. die Wanderfeld(er) in dem (den) Feldsektor(en) (41) so gesteuert ist (sind), daß die elektrische Maschine (4) neben Drehungleichförmigkeiten auch Radialschwingungen der Welle verringert.

11. System nach einem der vorhergehenden Ansprüche, bei welchem die elektrische Drehfeldmaschine (4) eine Asynchronmaschine, eine Synchronmaschine oder eine Reluktanzmaschine ist.

12. System nach einem der vorhergehenden Ansprüche, bei welchem die Steuerung der elektrischen Maschine (4) auf der Grundlage einer feldorientierten Regelung (Vektorregelung) erfolgt.

13. System nach einem der vorhergehenden Ansprüche, bei welchem die elektrische Maschine (4) eine feine Polteilung, insbesondere wenigstens einen Pol (39) pro 45°-Ständerwinkel, aufweist.

14. System nach einem der vorhergehenden Ansprüche, bei welchem die elektrische Maschine (4) eine hohe maximale Polwechselfrequenz, insbesondere zwischen 300 und 1600 Hz und mehr, hat.

15. System nach einem der vorhergehenden Ansprüche, bei welchem der Ständer (8) der elektrischen Maschine (4) dünne Ständerbleche, insbesondere mit einer Dikke von 0,35 mm oder weniger, aufweist und/oder die Ständerbleche aus einem Material mit niedrigen Ummagnetisierungsverlusten, insbesondere kleiner als 1 Watt/Kilogramn bei 50 Hz und einem Tesla, gefertigt sind.

16. System nach einem der vorhergehenden Ansprüche, bei welchem die elektrische Maschine (4) eine innere Fluidkühlung, insbesondere eine Sprühfluidkühlung (12), aufweist, wobei die Zufuhr des Kühlfluids insbesondere verlusleistungs- und/oder drehzahlabhängig erfolgt.

17. System nach einem der vorhergehenden Ansprüche, bei welchem die elektrische Maschine (4) eine hohe Drehmomentdichte - bezogen auf das maximale Drehmoment - aufweist, insbesondere größer als 0,01 Nm/cm³.

18. System nach einem der vorhergehenden Ansprüche, bei welchem die elektrische Maschine (4) stark im Bereich magnetischer Sättigung arbeitet, insbesondere bei einem Strombelag (bei max. Drehmoment) von wenigstens 400 bis 1000 A/cm Luftspaltlänge in Umfangsrichtung.

19. System nach einem der vorhergehenden Ansprüche, bei welchem elektronische Schalter (43, 47, 50) des Wechselrichters (17) fluidgekühlt, insbesondere siedebadgekühlt, sind.

20. System nach einem der vorhergehenden Ansprüche, bei welchem mehrere elektronische Schalter (43) des Wechselrichters (17), insbesondere 2 bis 20 und mehr, parallel geschaltet sind.

21. System nach einem der vorhergehenden Ansprüche, bei welchem der Wechselrichter (17) als Schalter (43, 47, 50) Halbleiterschalter, insbesondere schnelle Halbleiterschalter, wie Feldeffekttransistoren, bipolare Transistoren und/oder bipolare Transistoren mit isoliertem Gateanschluß (IGBTs) umfaßt.

22. System nach einem der vorhergehenden Ansprüche, bei welchem in die elektrische Maschine (4), und zwar insbesondere in deren Läufer (9), eine Kupplung, insbesondere eine Fahrkupplung (5) integriert ist.

23. System nach einem der vorhergehenden Ansprüche, bei welchem die elektrische Maschine (17) oder die Kurbelwelle/Welle mit einem Läuferlage- bzw. Wellenlage-Geber mit einer Genauigkeit von wenigstens 0,5 Grad ausgerüstet ist.

## Claims

1. A system for active dampening of rotational non-uniformities of the crankshaft (10) of an internal combustion engine (1) or of a shaft coupled thereto, with
- an electric rotary-field machine (4), which applies alternating torques to the crankshaft (10) or the shaft, so that it counteracts positive and negative rotational non-uniformities,
- at least one invertor (17), which generates the voltages and/or currents of variable frequency, amplitude and/or phase required for the magnetic fields of the electric machine (4) by sine-evaluated pulse modulation with a clock frequency greater than 10 kHz;
- wherein the invertor (17) has an intermediate circuit with higher voltage level than an on-board network;
- and wherein the invertor (17) is equipped in the intermediate circuit with an energy accumulator (19, 24) for buffering of energy accruing during the active dampening;
- wherein both the removal of energy from the intermediate circuit during motor operation of the electric machine (4) and the feeding of energy into the intermediate circuit in generator mode each occur at the elevated voltage level.

2. A system according to Claim 1, in which the electric machine (4) superimposes a positive or negative torque on the alternating torques for dampening of rotational non-uniformities in order to further achieve a driving action or a braking or generator-type action.

3. A system according to Claim 1 or 2, in which the energy accumulator (24) is a flywheel accumulator.

4. A system according to one of the preceding claims, in which the electric machine (4) also has the function of a starter.

5. A system according to one of the preceding claims, in which the electric machine (4) also has the function of a generator for power supply.

6. A system according to one of the preceding claims, in which the electric machine (4) can bring about or sustain an acceleration and/or braking of the crankshaft (10) or of the shaft, in order to accelerate or brake a vehicle and/or reduce the slip of a drive wheel by braking in the context of an anti-slip control.

7. A system according to one of the preceding claims, in which auxiliary machines such as air conditioners (29), servo-drives (30), and pumps are electrically powered at a high voltage level from the intermediate circuit.

8. A system according to one of the preceding claims, in which the reduction of rotational non-uniformities is achieved by closed-loop control, open-loop control, namely and in particular characteristic diagram control, adaptive control, and/or mixed forms thereof.

9. A system according to Claim 8, in which the gas pressure and/or the momentary torque of the internal combustion engine (1) serves as a controlled variable for the reduction of rotational non-uniformities.

10. A system according to one of the preceding claims, in which the electric machine (4) has a field sector (41) or several field sectors (41) with at least partly independent travelling waves, wherein the travelling wave(s) in the field sector(s) (41) is (are) controlled so that the electric machine (4) also reduces radial vibrations of the shaft, in addition to rotational non-uniformities.

11. A system according to one of the preceding claims, in which the electric rotary-field machine (4) is an induction machine, a synchronous machine, or a reluctance machine.

12. A system according to one of the preceding claims, in which the control of the electric machine (4) is based on a field-oriented automatic control (vector control).

13. A system according to one of the preceding claims, in which the electric machine (4) has a fine pole division, in particular, at least one pole (39) per 45° stator angle.

14. A system according to one of the preceding claims, in which the electric machine (4) has a high maximum pole reversal frequency, in particular, between 300 and 1600 Hz or more.

15. A system according to one of the preceding claims, in which the stator (8) of the electric machine (4) has thin stator plates, in particular, with a thickness of 0.35 mm or less, and/or the stator plates are made from a material with low magnetic reversal losses, in particular less than 1 Watt/kilogram at 50 Hz and one Tesla.

16. A system according to one of the preceding claims, in which the electric machine (4) has an internal fluid cooling, in particular, a spray fluid cooling (12), wherein the supply of cooling fluid is dependent in particular on the dissipation power and/or rotary speed.

17. A system according to one of the preceding claims, in which the electric machine (4) has a high torque density - in terms of the maximum torque - in particular, greater than 0.01 Nm/cm³.

18. A system according to one of the preceding claims, in which the electric machine (4) works strongly in the magnetic saturation region, in particular, at a current coverage (or maximum torque) of at least 400 to 1000 A/cm air gap length in the circumferential direction.

19. A system according to one of the preceding claims, in which electronic switches (43, 47, 50) of the invertor (17) are fluid-cooled, in particular, cooled in an evaporation bath.

20. A system according to one of the preceding claims, in which several electronic switches (43) of the invertor (17), in particular, 2 to 20 or more, are connected in parallel.

21. A system according to one of the preceding claims, in which the invertor (17) contains, as switches (43, 47, 50), semiconductor switches, in particular, highspeed semiconductor switches, such as field effect transistors, bipolar transistors, and/or bipolar transistors with insulated gate (IGBTs).

22. A system according to one of the preceding claims, in which a coupling, especially a drive coupling (5), is integrated in the electric machine (4), especially in its rotor (9).

23. A system according to one of the preceding claims, in which the electric machine (17) or the crankshaft/shaft is equipped with a rotor position or shaft position pickup with a precision of at least 0.5 degrees.

## Revendications

1. Système d'amortissement actif d'irrégularités de rotation du vilebrequin (10) d'un moteur à combustion interne (1) ou d'un arbre qui lui est couplé, comportant
- une machine électrique à champ tournant (4) qui exerce sur le vilebrequin (10) ou sur l'arbre des moments de rotation changeants de façon à s'opposer à des irrégularités de rotation positives et négatives,
- au moins un onduleur (17) qui produit les tensions et/ou les intensités nécessaires pour les champs magnétiques de la machine électrique (4), de fréquence, d'amplitude et/ou de phase variables par modulation par impulsions à fonction sinusoïdale, d'une fréquence de cadencement supérieure à 10 kHz;
- dans lequel l'onduleur (17) présente un circuit intermédiaire d'un niveau de tension élevé par rapport à un réseau de bord;
- et dans lequel l'onduleur (17) qui se trouve dans le circuit intermédiaire est équipé d'un accumulateur d'énergie (19, 24) pour l'accumulation intermédiaire de l'énergie qui apparaît lors de l'amortissement actif;
- dans lequel aussi bien le prélèvement d'énergie dans le circuit intermédiaire en mode moteur de la machine électrique (4) que l'amenée d'énergie dans le circuit intermédiaire en mode génératrice se fait chaque fois au niveau de tension élevé.

2. Système selon la revendication 1, dans lequel la machine électrique (4) superpose, pour obtenir en supplément une action d'entraînement ou une action de frein ou de génératrice, un moment de rotation positif ou négatif aux moments de rotation changeants exercés pour l'amortissement d'irrégularités de rotation.

3. Système selon la revendication 1 ou 2, dans lequel l'accumulateur d'énergie (24) est un accumulateur à volant.

4. Système selon l'une des revendications précédentes, dans lequel la machine électrique (4) a en outre la fonction d'un démarreur.

5. Système selon l'une des revendications précédentes, dans lequel la machine électrique (4) a en outre la fonction d'une génératrice pour l'alimentation en courant.

6. Système selon l'une des revendications précédentes, dans lequel la machine électrique (4) peut provoquer ou aider une accélération et/ou un freinage du vilebrequin (10) ou de l'arbre, pour accélérer ou freiner un véhicule et/ou pour diminuer le patinage d'une roue motrice dans le cadre d'une régulation antipatinage par freinage.

7. Système selon l'une des revendications précédentes, dans lequel, à partir du circuit intermédiaire, des machines auxiliaires, comme des machines de climatisation (29), des servomécanismes d'entraînement (30), des pompes, sont entraînées électriquement à un niveau de tension élevé.

8. Système selon l'une des revendications précédentes, dans lequel la diminution d'irrégularités de rotation se fait par régulation, par commande et de façon plus précise en particulier par commande par champ de caractéristiques, par commande adaptative et/ou par des formes mixtes.

9. Système selon la revendication 8, dans lequel la pression du gaz et/ou le moment de rotation instantané du moteur à combustion interne (1) sert de grandeur réglée pour diminuer des irrégularités de rotation.

10. Système selon l'une des revendications précédentes, dans lequel la machine électrique (4) présente un secteur de champ (41) ou plusieurs secteurs de champ (41) présentant des champs d'ondes progressives au moins partiellement indépendants, dans lequel le champ, ou les champs, d'ondes progressives est commandé (sont commandés) dans le secteur de champ (dans les secteurs de champ) (41) de façon qu'en plus d'irrégularités de rotation, la machine électrique (4) diminue également des vibrations radiales de l'arbre.

11. Système selon l'une des revendications précédentes, dans lequel la machine électrique à champ tournant (4) est une machine asynchrone, une machine synchrone ou une machine à réluctance.

12. Système selon l'une des revendications précédentes, dans lequel la commande de la machine électrique (4) se fait sur la base d'une régulation à orientation champ (régulation vectorielle).

13. Système selon l'une des revendications précédentes, dans lequel la machine électrique (4) présente une division fine des pôles, en particulier au moins un pôle (39) par secteur angulaire de 45° du stator.

14. Système selon l'une des revendications précédentes, dans lequel la machine électrique (4) a une fréquence d'alternance maximale élevée, en particulier entre 300 et 1600 Hz et davantage.

15. Système selon l'une des revendications précédentes, dans lequel le stator (8) de la machine électrique (4) présente des tôles de stator minces, en particulier d'une épaisseur de 0,35 mm ou moins, et/ou les tôles de stator sont fabriquées en un matériau à faibles pertes par inversion de magnétisation, en particulier inférieures à 1 watt/kilogramme à 50 Hz et un tesla.

16. Système selon l'une des revendications précédentes, dans lequel la machine électrique (4) présente un refroidissement intérieur par un fluide, en particulier un refroidissement par un fluide projeté (12), l'amenée du fluide de refroidissement se faisant en particulier en fonction de la puissance perdue et/ou en fonction de la vitesse de rotation.

17. Système selon l'une des revendications précédentes, dans lequel la machine électrique (4) présente une densité de moment de rotation élevée - rapportée au moment de rotation maximal - en particulier supérieure à 0,01 Nm/cm³.

18. Système selon l'une des revendications précédentes, dans lequel la machine électrique (4) travaille fortement dans la zone de saturation magnétique, en particulier dans le cas d'une densité de courant linéique (pour un moment de rotation maximal) d'au moins 400 à 1000 A/cm de longueur d'entrefer selon la direction périphérique.

19. Système selon l'une des revendications précédentes, dans lequel des interrupteurs électroniques (43, 47, 50) de l'onduleur (17) sont refroidis par un fluide, en particulier refroidis par un bain porté à ébullition.

20. Système selon l'une des revendications précédentes, dans lequel plusieurs interrupteurs électroniques (43) de l'onduleur (17), en particulier 2 à 20 et davantage, sont montés en parallèle.

21. Système selon l'une des revendications précédentes, dans lequel l'onduleur (17) comporte comme interrupteurs (43, 47, 50), des interrupteurs à semi-conducteur, en particulier des interrupteurs à semi-conducteurs rapides, comme des transistors à effet de champ, des transistors bipolaires et/ou des transistors bipolaires à grille isolée (IGBT).

22. Système selon l'une des revendications précédentes, dans lequel dans la machine électrique (4) et de façon plus précise en particulier dans son rotor (9) est intégré un couplage, en particulier un embrayage (5).

23. Système selon l'une des revendications précédentes, dans lequel la machine électrique (17) ou le vilebrequin/l'arbre est équipé d'un émetteur de position du rotor ou d'un émetteur de position de l'arbre d'une précision d'au moins 0,5 degré.
